(19) **Europäisches Patentamt / European Patent Office / Office européen des brevets**

(11) **EP 4 572 281 A1**

(12) **DEMANDE DE BREVET EUROPEEN**

(43) Date de publication:
**18.06.2025 Bulletin 2025/25**

(21) Numéro de dépôt: **24216279.0**

(22) Date de dépôt: **28.11.2024**

(51) Classification Internationale des Brevets (IPC):
*H04L 41/142* (2022.01)  *H04L 41/14* (2022.01)
*H04L 41/16* (2022.01)  *H04L 43/065* (2022.01)
*H04L 43/0876* (2022.01)  *H04W 4/029* (2018.01)
*H04W 16/18* (2009.01)  *H04W 16/22* (2009.01)
*H04W 64/00* (2009.01)

(52) Classification Coopérative des Brevets (CPC):
**H04L 41/142; H04L 41/145; H04L 41/16; H04L 43/065; H04L 43/0876; H04W 4/029; H04W 16/18; H04W 16/22; H04W 64/006**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **11.12.2023 FR 2313935**

(71) Demandeur: **IFP Energies nouvelles
92500 Rueil-Malmaison (FR)**

(72) Inventeurs:
• **DE NUNZIO, Giovanni
92852 RUEIL-MALMAISON CEDEX (FR)**
• **COLLET, David
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(54) **PROCEDE DE DETERMINATION D'UN DEBIT D'UTILISATEURS ET/OU D'EMISSIONS POLLUANTES SUR AU MOINS UN BRIN D'UN RESEAU**

(57) L'invention concerne un procédé de détermination du nombre d'utilisations de chaque mode de transport sur un brin d'un réseau de transport dans un espace prédéterminé, pour lequel:

a) on acquiert (Acq) des données spatiales et temporelles d'apprentissage (DSP),

b) on discrétise (Z) l'espace prédéterminé en zones (ZD/ZA);

c) pour chaque trajet défini par une zone d'origine (ZD) et une zone de destination (ZA),

c1) on détermine (For) des trajectoires d'apprentissage (Traj);

c2) on détermine (MDT), pour chaque trajectoire d'apprentissage (Traj), le chemin parcouru sur le réseau de transport et le mode de transport;

d) à partir des résultats de l'étape c2), on réalise (Real) un modèle (Mod) du nombre d'utilisations de chaque mode de transport sur le brin;

e) on acquiert d'une matrice de données (Mat) et on l'applique (App) au modèle (Mod) pour déterminer le nombre d'utilisations (Nb_mdt) de chaque mode de transport sur le brin.

[Fig 1]

EP 4 572 281 A1

## Description

## Domaine technique

La présente invention concerne le domaine de la détermination de trafic de véhicules de différents types ou d'utilisateurs pour un réseau de transport, lorsque différents modes de transport sont possibles. En particulier, l'invention concerne un procédé de détermination de nombres d'utilisations (ou d'utilisateurs) de différents modes de transports sur au moins un brin d'un réseau de transport. Ainsi, on peut déterminer le débit de chaque type de mode de transport (ou le taux d'utilisation ou la fréquence d'utilisation de chaque mode de transport).

L'invention concerne également le domaine de la détermination des émissions polluantes émises sur au moins un brin du réseau routier, en tenant compte de différents modes de transport.

Aujourd'hui, les métropoles et les gestionnaires de route disposent d'outils de modélisation des déplacements pour planifier et simuler l'impact de mesures de régulation et de travaux futurs, afin de réduire la congestion ou d'améliorer la qualité de l'air. Cependant, ces modèles sont très difficiles à mettre en place (besoin de données d'enquête de population très coûteuses, besoin d'un effort conséquent de calibration), difficiles à maintenir (la maintenance étant déléguée aux bureaux d'études, il est donc difficile de faire évoluer l'outil rapidement), et difficiles à mettre à jour (les enquêtes de population sont menées tous les 5 à 10 ans).

Il existe donc un fort besoin de disposer d'outils de détermination des débits véhiculaires au sein d'un réseau de transport sans devoir utiliser en entrée des données trop coûteuses et difficiles à obtenir comme les enquêtes de mobilité, qui sont d'ailleurs statiques et qui ne sont pas adaptées à prédire les évolutions rapides de la mobilité, ou bien des données d'usage réel, comme par exemple les données « floating car data » (FCD pouvant être traduit par données de trajets réalisés et mesurés), qui sont dynamiques mais pas forcément disponibles sur l'ensemble des brins d'un réseau de transport. Par ailleurs, ces outils alternatifs devraient être simples d'utilisation par des non-experts, rapides d'exécution pour évaluer et comparer facilement plusieurs cas d'étude, et enfin fiables en reproduisant au mieux des données récentes de comptage sur le réseau routier considéré.

De plus, selon l'Organisation Mondiale de la Santé (OMS), environ 18 000 décès par jour sont attribuables à une mauvaise qualité de l'air, ce qui fait monter l'estimation à environ 6,5 millions de décès par an. La pollution atmosphérique représente également un fort enjeu financier : une commission d'enquête sénatoriale estime que le coût total de la pollution de l'air s'établit entre 68 et 97 milliards d'euros par an pour la France, dans une évaluation, rendue en juillet 2015, intégrant à la fois les dommages sanitaires de la pollution, mais également ses conséquences sur les bâtiments, les écosystèmes et l'agriculture. Le secteur des transports représente toujours l'une des sources les plus importantes de polluants, malgré les nombreuses mesures mises en place par les pouvoirs publics et les avancées technologiques dans le domaine. Les transports, tous modes confondus, sont responsables d'environ 50% des émissions globales d'oxydes d'azote ($NO_x$) et environ 10% des émissions de particules PM2,5 (c'est-à-dire des particules d'un diamètre inférieur à 2.5 microns). Le transport routier seul représente une part considérable de cet apport dû aux transports, avec 58% des émissions de $NO_x$ et 73% des émissions de particules PM2,5. Ces émissions sont dues principalement à trois facteurs : les émissions à l'échappement, les émissions d'abrasion et les émissions d'évaporation. Si les poids lourds sont les principaux émetteurs de polluants, ce sont les véhicules particuliers, plus représentés dans les zones urbaines fortement peuplées, qui ont l'impact le plus élevé sur l'exposition des citoyens à une mauvaise qualité de l'air.

Les mesures mises en place au niveau local pour gérer l'utilisation des transports (comme une meilleure planification des transports et les mesures pour inciter le transfert modal, c'est-à-dire le changement de mode de transport), ainsi que le progressif renouvellement du parc automobile, ont contribué à limiter les émissions de gaz à l'échappement du transport routier dans les villes et les agglomérations urbaines. En effet, dans le monde, l'activité liée au transport routier a augmenté d'un quart au cours de la dernière décennie, alors que les émissions de $NO_x$ ont augmenté de 5% et les émissions de particules ont diminué de 6%. Malgré ces améliorations, les niveaux de pollution dépassent encore les seuils fixés par l'OMS dans de nombreuses villes.

Pour améliorer significativement la qualité de l'air sur leur territoire, les collectivités françaises en milieu urbain se doivent d'agir pour réduire les émissions liées au transport. A titre d'exemple, à l'heure actuelle, le secteur routier représente, sur le territoire de la Métropole de Lyon, les deux tiers des émissions totales d'oxydes d'azote ($NO_x$) et un tiers des émissions totales de particules PM10 (c'est-à-dire des particules d'un diamètre inférieur à 10 microns). Pourtant, à ce jour, les équipes du service Voirie Mobilité Urbaine de cette collectivité n'ont pas d'outils leur permettant de déterminer l'impact sur la qualité de l'air des aménagements des différents réseaux de transport et/ou des caractéristiques des véhicules circulant sur les réseaux de transport. Les prises de décisions en rapport avec ces sujets ne tiennent donc pas compte de l'impact sur les émissions polluantes, faute d'outils.

Par conséquent, il s'avère difficile pour les villes de prendre les bonnes décisions en matière d'aménagement de l'infrastructure des réseaux de transport et de législation, par exemple vis-à-vis des caractéristiques des véhicule autorisés à circuler sur les réseaux, sans avoir à disposition des outils précis d'évaluation et de projection d'impact des mesures envisagées sur les émissions polluantes des différents modes de transport et la qualité de l'air. Ces nouveaux outils devraient idéalement permettre d'évaluer l'impact des mesures sur des échelles temporelles et spatiales très fines (de l'ordre d'une minute, et de l'ordre de dix mètres) en tenant compte des différents moyens de transport, des différents types de véhicules et des trajets réalisés par les différents utilisateurs de ces réseaux.

**Technique antérieure**

Le téléphone mobile est devenu l'un des objets incontournables de la vie de tous les jours pour bon nombre d'humains. Le téléphone mobile est prévu pour être connecté au réseau de téléphonie mobile, mais les technologies plus récentes permettent d'être aussi connectées et détectées par d'autres appareils, tels que des satellites via le protocole Global Positioning System (GPS), des bornes de réseau sans fil via le protocole WIFI ou d'autres téléphones mobiles via le protocole Bluetooth. Ces données de connexion peuvent permettre de déterminer de manière plus ou moins précise la position de l'appareil mobile, et donc a priori celle de son propriétaire (appelé par la suite utilisateur).

Il est connu, notamment de la publication de Loïc Bonnetain, Angelo Furno, Nour-Eddin El Faouzi, Marco Fiore, Razvan Stanica, Zbigniew Smoreda, Cezary Ziemlicki ; 2021. « TRANSIT: Fine-grained human mobility trajectory inference at scale with mobile network signaling data » - Transportation Research Part C: Emerging Technologies, d'utiliser des données de type NSD (pour « Network Signal Data » en anglais, ce qui signifie « données de signal réseau »), pour illustrer les déplacements sur des grands axes d'un réseau de transport d'une grande ville. Mais cette méthode ne permet pas de déterminer le nombre d'utilisateurs de chaque type de mode de transport, et encore moins de déterminer les émissions polluantes, sur un brin du réseau de transport.

On connaît également le document de Manon Seppecher, 2022, « Exploration de données de téléphonie mobile pour la reconstruction de patterns globaux de mobilité urbaine pour le calcul d'émission à large échelle, Manuscrit de thèse », qui décrit une méthode cherchant, après analyse des trajectoires des utilisateurs, à estimer la distance totale parcourue par les utilisateurs sur des régions d'un territoire d'une part, et estimer la vitesse moyenne des utilisateurs sur les mêmes régions d'autre part. Ensuite, des émissions par région sont estimées avec un modèle de COPERT pour « COmputer Program to calculate Emission from Road Transport », en anglais, ce qui signifie « Programme d'ordinateur pour calculer les émissions du transport routier ». Cependant, cette méthode ne permet pas l'identification du mode de transport. Par conséquent, cette méthode ne permet pas de discrétiser sur chaque brin du réseau, la part provenant de chaque mode de transport et par conséquent, elle n'applique pas un modèle d'émission dépendant du mode de transport identifié.

La demande de brevet CN105426636 utilise un modèle de trafic pour obtenir des débits sur les brins d'un réseau routier et estime les émissions polluantes à partir d'un modèle de COPERT. Cette demande n'identifie pas le mode de transport associé à chaque trajectoire.

La demande de brevet CN112767686 utilise des données GPS pour « Global Positioning System », en anglais signifiant « système de positionnement global ». Toutefois, l'utilisation de données GPS est moins représentative de la population que les données spatiales et temporelles du téléphone à un réseau de téléphonie mobile car ces données sont seulement possibles lorsque l'utilisateur utilise le GPS de son téléphone. De plus, chaque trajectoire est considérée individuellement, ce qui impose des temps de calcul et des capacités de mémoire informatiques importants.

La demande de brevet CN108682156 utilise elle aussi des données GPS de taxi, ce qui limite le type de mode de transport utilisé dans cette méthode. Elle utilise également des données SIG (acronyme pour Système d'Information Géographique) mais elle ne permet pas de déterminer le nombre d'utilisations de chaque type de mode de transport sur un brin du réseau, ni de déterminer précisément les émissions polluantes.

**Résumé de l'invention**

Le problème technique de l'invention consiste à concevoir une méthode pour déterminer les flux de trafic sur un brin de réseau routier au sein d'un espace prédéterminé, c'est-à-dire le nombre d'utilisations de chaque type de mode de transport (ou le nombre d'utilisateurs de chaque mode de transport), ou le débit de chaque type de mode de transport, ou encore la fréquence d'utilisation de chaque type de mode de transport, sur le brin considéré.

On cherche de préférence à minimiser le temps de calcul et la mémoire informatique et/ou le nombre de processeurs nécessaires.

Par ailleurs, la méthode peut également chercher à permettre l'évaluation rapide, en termes de débit d'utilisateurs et/ou d'émissions polluantes, des modifications à apporter au réseau de transport (modifications d'infrastructures, telles que l'ajout d'une voie routière, la limitation de la vitesse, l'ajout d'un feu de signalisation ou d'un rondpoint, l'aménagement de voie de mobilité douce, l'ajout de lignes de bus ou tramway ou métro etc...) ou des décisions de restrictions de certains véhicules à certaines zones pour limiter la congestion et les émissions polluantes.

De plus, l'invention cherche à utiliser des données basées sur un fort taux de pénétration de la population (c'est-à-dire une très large proportion d'utilisateurs de téléphone mobile), même si ces données sont de faibles résolutions.

L'invention concerne un procédé de détermination du nombre d'utilisations de différents modes de transport sur au moins un brin d'un réseau de transport au sein d'un espace prédéterminé, au moyen de téléphones et d'un réseau de téléphonie mobile auxquelles lesdits téléphones peuvent se connecter, et au moyen d'au moins un réseau de transport comprenant des brins. De plus, on réalise au moins les étapes suivantes par des moyens informatiques, tels qu'un ordinateur :

a) on acquiert des données spatiales et temporelles d'apprentissage de connexion de téléphones audit réseau de téléphonie mobile, les données spatiales et temporelles d'apprentissage comprenant les positions des antennes du réseau de téléphonie mobile auxquelles chaque téléphone s'est connecté et les instants auxquels ont eu lieu ces connexions de chaque téléphone aux antennes, de préférence les données spatiales et temporelles d'apprentissage étant des données CDR ou NSD

b) on discrétise l'espace prédéterminé en zones ;

c) pour chaque trajet défini par une zone d'origine et une zone de destination, chaque zone d'origine et chaque zone de destination étant parmi lesdites zones de l'espace prédéterminé discrétisé,

c1) on détermine des trajectoires d'apprentissage dudit trajet, à partir des données spatiales et temporelles d'apprentissage acquises, chaque trajectoire d'apprentissage correspondant à la succession de positions des antennes auxquelles un desdits téléphones s'est connecté et les instants de ces connexions;

c2) on détermine, pour chaque trajectoire d'apprentissage déterminée, le chemin parcouru sur le réseau de transport et le mode de transport associé, le chemin parcouru étant une succession de brins du réseau de transport à des instants de passage;

d) à partir des chemins et des modes de transports déterminés à l'étape c2), on réalise un modèle du nombre d'utilisations de chaque mode de transport sur ledit au moins un brin du réseau de transport reliant les trajectoires à un nombre d'utilisations de chaque mode de transport sur ledit au moins un brin du réseau de transport ;

e) on acquiert une matrice de données et on applique ladite matrice de données audit modèle du nombre d'utilisations pour chaque mode de transport sur ledit au moins un brin du réseau de transport pour déterminer le nombre d'utilisations de chaque mode de transport sur ledit au moins un brin du réseau de transport à partir de ladite matrice de données. Avantageusement, à l'étape d), pour réaliser le modèle du nombre d'utilisations de chaque mode de transport sur ledit au moins un brin du réseau de transport, on réalise les sous-étapes suivantes :

d1) pour chaque trajet, on identifie un premier nombre de trajectoires d'apprentissage liées à chaque mode de transport ;

d2) pour chaque trajet, on identifie un deuxième nombre de trajectoires d'apprentissage liées à chaque mode de transport et passant par ledit au moins un brin u réseau de transport ;

d3) puis pour chaque trajet, on détermine la proportion de trajectoires d'apprentissage liées à chaque mode de transport et passant par ledit au moins un brin du réseau de transport, cette proportion étant, pour chaque mode de transport, le rapport entre le deuxième nombre et le premier nombre ;

d4) on réalise le modèle du nombre d'utilisations de chaque mode de transport sur ledit au moins un brin du réseau de transport à partir de l'équation suivante :

$$\hat{f}_{M,b_l} = \sum_{A \in \Gamma} \sum_{B \neq A \in \Gamma} q_{A,B,M,b_l} \tilde{f}_{A,B,M}$$

avec $\hat{f}_{M,b_l}$ le nombre d'utilisations du mode de transport prédéterminé M passant par ledit au moins un brin $b_l$ du réseau de transport

$q_{A,B,M,b_l}$ la proportion calculée à l'étape d3) pour chaque trajet partant de la zone d'origine A vers la zone de destination B du mode de transport prédéterminé M passant par ledit au moins un brin $b_l$ du réseau de transport

$\tilde{f}_{A,B,M}$ le nombre de trajectoires du trajet partant de la zone d'origine A vers la zone de destination B pour le mode de transport prédéterminé

$\Gamma$ étant l'espace du réseau de transport considéré.

De préférence, on réalise un pré-traitement et/ou un filtrage des données spatiales et temporelles d'apprentissage.

De manière avantageuse, on affecte un premier coefficient de redressement auxdites trajectoires d'apprentissage en fonction des utilisateurs des téléphones pour lesquels les données spatiales et temporelles d'apprentissage ont été acquises à l'étape a). Préférentiellement, on acquiert des deuxièmes données spatiales et temporelles de connexion de téléphones audit réseau de téléphonie mobile, les deuxièmes données spatiales et temporelles comprenant les positions des antennes du réseau de téléphonie mobile auxquelles chaque téléphone s'est connecté et les instants auxquels ont eu lieu ces connexions de chaque téléphone aux antennes, et on détermine des deuxièmes trajectoires de manière à former ladite matrice de données acquise à partir des deuxièmes données spatiales et temporelles et de préférence on affecte un deuxième coefficient de redressement auxdites deuxièmes trajectoires en fonction des utilisateurs des téléphones pour lesquels les deuxièmes données spatiales et temporelles ont été acquises.

Selon une configuration de l'invention, on regroupe les deuxièmes trajectoires en clusters de deuxièmes trajectoires, de préférence au moyen d'une méthode de regroupement agglomératif basé sur une distance spatio-temporelle, ladite distance spatio-temporelle étant une somme pondérée d'une distance spatiale entre deux deuxièmes trajectoires et une distance temporelle fonction de la différence de durée entre les deux deuxièmes trajectoires, ladite distance spatiale et la distance temporelle étant déterminées à partir des deuxièmes données spatiales et temporelles, les groupements différenciant les vitesses et les trajectoires.

Préférentiellement, à l'étape c1), on regroupe différentes trajectoires d'apprentissage déterminées en clusters de trajectoires d'apprentissage.

Avantageusement, on regroupe les trajectoires d'apprentissage au moyen d'une méthode de regroupement agglomératif basé sur une distance spatio-temporelle, ladite distance spatio-temporelle étant une somme pondérée d'une distance spatiale entre deux trajectoires d'apprentissage et une distance temporelle fonction de la différence de durée entre les deux trajectoires d'apprentissage), ladite distance spatiale et la distance temporelle étant déterminées à partir des données spatiales et temporelles d'apprentissage, les groupements différenciant les vitesses et les trajectoires.

Selon un aspect de l'invention, aux étapes c1) et c2), on réalise au moins les sous-étapes suivantes :

- on construit des graphes de transport pour chaque mode de transport, chaque graphe de transport comprenant des nœuds, des portions de route reliant les différents nœuds et les vitesses moyennes de déplacement sur chaque portion de route, chaque portion de route du graphe de transport représentant les routes possibles par le mode de transport associé, la superposition des graphes de transport formant le réseau de transport, chaque brin du réseau de transport correspondant à une desdites portions de route d'au moins un desdits graphes de transport, et on met en œuvre au moins les étapes suivantes :

  i) à partir des données spatiales et temporelles d'apprentissage acquises, on détermine une succession de couples emplacements-instants définis par des emplacements correspondant à desdites positions des antennes issues des données spatiales et temporelles d'apprentissage acquises et par les instants correspondant à ces emplacements et on forme au moins une sous-route reliant deux couples emplacements-instants successifs, une succession des sous-routes déterminant une trajectoire d'apprentissage ;

  ii) Pour chaque graphe de transport, on détermine les positions successives du téléphone sur des nœuds identifiés successifs du graphe de transport à partir des couples emplacements-instants, les nœuds identifiés successifs étant positionnés le plus près possible de chaque emplacement ;

  iii) Puis pour chaque graphe de transport et pour chaque sous-route, on détermine, par des optimisations de plus court chemin, un nombre prédéterminé de chemins possibles permettant de relier les différents nœuds identifiés successifs par des portions de route, chaque chemin possible comprenant les nœuds de passage reliant toutes les portions de route du chemin possible, et on calcule l'instant de passage de chaque nœud de passage à partir des vitesses moyennes associées à chaque portion de route, chaque chemin possible étant déterminé par la liste de tous les couples nœuds de passage - instants de passages dudit chemin possible ;

  iv) on détermine un indice de corrélation entre chacun des chemins possibles déterminés et la trajectoire d'apprentissage, l'indice de corrélation étant représentatif de la proximité spatiale et/ou de la proximité temporelle de chaque nœud identifié successif avec les emplacements de la trajectoire d'apprentissage ; et

  v) on détermine le mode de transport de chaque trajectoire d'apprentissage, par détermination du mode de transport qui optimise l'indice de corrélation de la trajectoire d'apprentissage, et le chemin parcouru correspondant au chemin possible optimisant l'indice de corrélation.

Avantageusement, on extrait un sous-graphe de chaque graphe de transport, le sous-graphe étant une partie du graphe de transport limité à une largeur prédéterminée autour de chaque sous-route déterminée à l'étape i) et on utilise le sous-graphe au lieu du graphe de transport pour chacune des étapes ii) à v).

Selon une variante de l'invention, on affiche le nombre d'utilisations de chaque mode de transport passant par l'au moins un brin du réseau de transport, de préférence par au moins un groupe de brins du réseau de transport et de manière encore préférée par tous les brins du réseau de transport, sur une carte représentative du réseau de transport.

L'invention concerne aussi un procédé de détermination d'émissions polluantes sur au moins un brin de réseau de transport au sein d'un espace prédéterminé, dans lequel on met en œuvre le procédé décrit précédemment et on détermine, pour l'au moins un brin du réseau de transport, les émissions polluantes dues à chaque mode de transport de chaque trajectoire d'apprentissage et/ou de la matrice de données passant par ledit brin.

Selon un mode de réalisation de l'invention, on détermine les émissions polluantes de chaque mode de transport par la multiplication d'une valeur d'émissions polluantes de chaque mode de transport sur ledit au moins un brin du réseau de transport et du nombre d'utilisations de chaque mode de transport associé sur ledit au moins un brin du réseau de transport.

Selon une variante de l'invention, on affiche les émissions polluantes déterminées sur une carte représentative du réseau de transport.

Préférentiellement, on applique un parc de véhicules pour déterminer les émissions polluantes, ledit parc de véhicules identifiant une répartition de différents types de véhicules et une valeur d'émissions polluantes en fonction des différents types de véhicules. L'invention concerne aussi un procédé de gestion d'infrastructure d'un réseau de transport au sein d'un espace prédétermine, dans lequel on met en œuvre au moins les étapes suivantes :

1) On détermine le nombre d'utilisations et/ou les émissions polluantes de chaque mode de transport pour au moins un brin du réseau de transport au moyen du procédé de détermination du nombre d'utilisations de chaque mode de transport sur au moins un brin de réseau de transport au sein de l'espace prédéterminé selon l'une des variantes ou combinaisons de variantes décrites précédemment ou du procédé de détermination des émissions polluantes selon l'une des variantes ou combinaisons de variantes décrites précédemment et

2) On modifie au moins une infrastructure du réseau de transport en fonction du nombre d'utilisations de chaque mode de transport ou des émissions polluantes, de préférence une infrastructure pour laquelle le nombre d'utilisations est supérieur à un seuil prédéterminé.

**Liste des figures**

D'autres caractéristiques et avantages des procédés selon l'invention, apparaîtront à la lecture de la description ci-après d'exemples non limitatifs de réalisations, en se référant aux figures annexées et décrites ci-après.

La figure 1 représente un premier mode de réalisation du procédé de détermination du nombre d'utilisations de différents modes de transport sur au moins un brin d'un réseau de transport au sein d'un espace prédéterminé selon l'invention.

La figure 2 représente un exemple de réalisation du modèle du nombre d'utilisations de chaque mode de transport sur ledit au moins un brin du réseau de transport du procédé de détermination du nombre d'utilisations de différents modes de transport sur au moins un brin d'un réseau de transport au sein d'un espace prédéterminé selon l'invention.

La figure 3 représente un deuxième mode de réalisation du procédé de détermination du nombre d'utilisations de différents modes de transport sur au moins un brin d'un réseau de transport au sein d'un espace prédéterminé selon l'invention.

La figure 4 représente un troisième mode de réalisation du procédé de détermination du nombre d'utilisations de différents modes de transport sur au moins un brin d'un réseau de transport au sein d'un espace prédéterminé selon l'invention.

La figure 5 représente un quatrième mode de réalisation du procédé de détermination du nombre d'utilisations de différents modes de transport sur au moins un brin d'un réseau de transport au sein d'un espace prédéterminé selon l'invention.

La figure 6 représente un exemple d'étape d'identification du mode de transport et du chemin du procédé de détermination du nombre d'utilisations de différents modes de transport sur au moins un brin d'un réseau de transport au sein d'un espace prédéterminé selon l'invention.

La figure 7 représente un exemple d'application du procédé de détermination du nombre d'utilisations de différents modes de transport sur au moins un brin d'un réseau de transport au sein d'une métropole selon l'invention.

**Description des modes de réalisation**

L'invention concerne un procédé de détermination du nombre d'utilisations de différents modes de transport sur au moins un brin (ou « section ») d'un réseau de transport au sein d'un espace prédéterminé. L'espace prédéterminé peut être par exemple une agglomération urbaine, telle qu'une métropole, une région ou un pays. Le réseau de transport considère alors l'ensemble des routes, lignes de transport des différents modes de transport reliant des points au sein de l'espace prédéterminé. Les différentes routes et lignes de transport sont formés par les brins du réseau de transport.

Le réseau de transport comprend des points d'intersections et des brins (qu'on peut aussi appeler « portions de route » ou « sections ») reliant les points d'intersections. Les brins relient deux points d'intersections du réseau de transport formant ainsi une liaison (des liens) entre ces deux points d'intersection. Les points d'intersection peuvent aussi être appelés « nœuds » du réseau de transport.

Alternativement, le nombre d'utilisations (ou d'utilisateurs) de différents modes de transport peut être le débit des utilisateurs, c'est-à-dire le nombre d'utilisateurs sur une période prédéterminée (par exemple une heure, une journée ou un mois), aussi appelé la fréquence, ou le taux d'utilisation de chaque mode de transport, le taux donne la proportion de l'utilisation (ou du nombre d'utilisateurs) de chaque mode de transport. Par la suite, le nombre d'utilisations peut être remplacé par « le nombre d'utilisateurs », ou « le débit des utilisateurs », ou « le nombre de passage » ou « la fréquence d'utilisations » ou « le taux d'utilisation ».

Les différents modes de transport peuvent par exemple comprendre le vélo, la trottinette, la marche à pied, la voiture, les véhicules de type poids-lourds, la moto, le bus, le tramway, le métro, et/ou le train.

Ainsi, le procédé permet de déterminer, sur un brin particulier du réseau de transport, le nombre de passages (un passage étant lié à un utilisateur et donc à une utilisation) en lien avec chaque mode de transport. Lorsqu'on s'intéresse à un nombre de passages sur une durée prédéterminée, on peut ainsi connaître la variabilité du nombre de passages et donc de la congestion. Le procédé selon l'invention peut notamment permettre de déterminer le nombre d'utilisations des différents modes de transport sur différentes périodes, par exemple en semaine ou le week end, en période de pointe ou en dehors des périodes de pointe.

Ce procédé peut notamment être utilisé pour modifier des infrastructures du réseau de transport (ajout de voies, construction de voies spécifiques pour des modes de transport particulier, vélo ou trottinette par exemple), pour modifier les limitations de vitesse de certains brins (au moins un brin) du réseau de transport ou pour interdire la circulation de certains véhicules sur certains brins (au moins un brin) du réseau de transport en évaluant l'impact de ces modifications sur la congestion du trafic ou sur la qualité de l'air.

Le procédé selon l'invention utilise des téléphones mobiles (appelés téléphones par la suite) et un réseau de téléphonie mobile auquel les téléphones mobiles peuvent se connecter, ainsi qu'au moins un réseau de transport comprenant des brins interconnectés les uns aux autres. Le réseau de transport combine différents moyens de transport et sur un même brin du réseau de transport, différents moyens de transport (bus, tramway, voiture, moto, camion, vélo, marche à pied par exemple) peuvent être possibles.

En outre, on réalise au moins les étapes suivantes :

a) acquisition des données spatiales et temporelles d'apprentissage de connexion de téléphones au réseau de téléphonie mobile ;
b) discrétisation de l'espace prédéterminé en zones ;
c) détermination des trajectoires d'apprentissage pour chaque trajet défini par une zone d'origine (aussi appelée « zone de départ ») et une zone de destination (aussi appelée « zone d'arrivée »), et détermination du chemin et du mode de transport de chaque trajectoire d'apprentissage
d) réalisation d'un modèle du nombre d'utilisations de chaque mode de transport sur le brin du réseau de transport ;
e) acquisition d'une matrice de données (aussi appelée « matrice de trajets") et application de la matrice de données au modèle du nombre d'utilisations pour chaque mode de transport sur le brin du réseau de transport.

Au moins certaines des étapes précédentes (étapes b), c), d) et/ou la partie de e) où on applique le modèle par exemple) peuvent être mises en œuvre par des moyens informatiques, tels qu'un ordinateur. Préférentiellement, toutes les étapes sont mises en œuvre par des moyens informatiques.

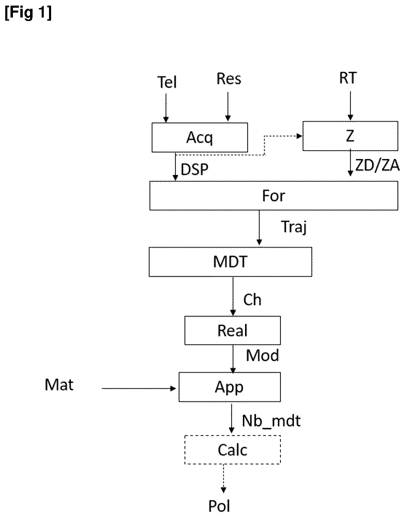

La figure 1 illustre, de manière schématique et non limitative, un premier mode de réalisation du procédé de détermination du nombre d'utilisations de différents modes de transport sur au moins un brin d'un réseau de transport au sein d'un espace prédéterminé selon l'invention.

Sur cette figure, on acquiert Acq des données spatiales et temporelles d'apprentissage DSP à partir de téléphones Tel (mobiles, aussi appelés portables) et d'un réseau Res de téléphonie mobile.

On discrétise Z l'espace prédéterminé en zones (qui serviront de zones d'origine ZD et des zones de destination ZA à l'étape suivantes) à partir d'un réseau de transport RT dans l'espace prédéterminé et éventuellement à partir des données spatiales et temporelles d'apprentissage DSP.

Sur la figure, les éléments en traits pointillés représentent les éléments qui sont optionnels. A partir des données spatiales et temporelles d'apprentissage DSP et de trajets définis par une zone d'origine ZD et une zone de destination ZA parmi les zones issues de la discrétisation Z de l'espace prédéterminé, on détermine For des trajectoires d'apprentissage Traj.

On détermine MDT alors une donnée de sortie Ch, la donnée de sortie Ch comprenant le mode de transport et le chemin de chaque trajectoire d'apprentissage Traj.

On peut alors réaliser l'étape d) du procédé, c'est-à-dire la construction Real d'un modèle Mod de détermination du nombre d'utilisations de chaque mode de transport sur un brin du réseau de transport à partir des données de sortie Ch des différentes trajectoires d'apprentissage Traj.

On peut alors appliquer App le modèle Mod à une matrice de données Mat pour déterminer le nombre d'utilisations Nb_mdt de chaque mode de transport sur le brin de réseau de transport.

De manière optionnelle, on peut ensuite calculer Calc les émissions polluantes Pol sur le brin du réseau de transport à partir du nombre d'utilisations Nb_mdt de chaque mode de transport sur le brin du réseau de transport.

Bien entendu, toutes les étapes décrites peuvent être réalisées sur plusieurs brins du réseau de transport, voir sur tous les brins du réseau de transport.

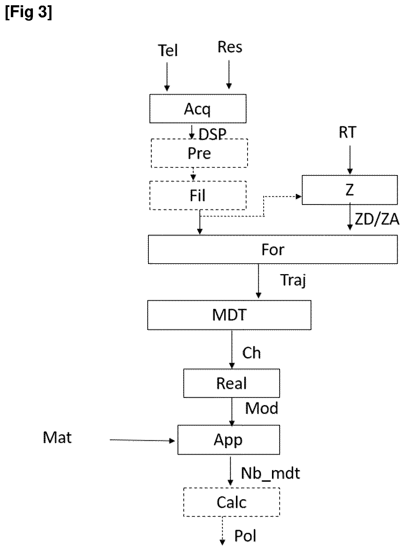

La figure 3 illustre, de manière schématique et non limitative, un deuxième mode de réalisation du procédé de détermination du nombre d'utilisations de différents modes de transport sur au moins un brin d'un réseau de transport au sein d'un espace prédéterminé selon l'invention.

Sur cette figure, les éléments et références identiques à la figure 1 correspondent aux mêmes éléments et références que la figure 1 et ne sont donc pas redétaillés.

Dans ce mode de réalisation, avant de déterminer For les trajectoires d'apprentissage Traj directement à partir des données spatiales et temporelles d'apprentissage DSP brutes (c'est-à-dire directement acquises), on peut réaliser une étape de pré-traitement Pre et/ou une étape de Filtrage Fil. On peut réaliser l'étape de pré-traitement Pre avant l'étape de filtrage Fil comme illustré sur la figure 3, ou dans l'ordre inverse.

Lorsqu'on utilise les données spatiales et temporelles d'apprentissage DSP pour discrétiser Z l'espace prédéterminé en zones, utilisées comme zones d'origine ZD et zones de destination ZA, on utilise de préférence ces données après les étapes de pré-traitement Pre et/ou de filtrage Fil.

Bien entendu, toutes les étapes décrites peuvent être réalisées sur plusieurs brins du réseau de transport, voir sur tous les brins du réseau de transport.

## Etape a) : acquisition des données spatiales et temporelles d'apprentissage de connexion de téléphones au réseau de téléphonie mobile

Lors de cette étape, on acquiert (ou on mesure ou on enregistre) des données spatiales et temporelles d'apprentissage de connexion de téléphones au réseau de téléphonie mobile, ces données spatiales et temporelles étant constituées par des évènements enregistrés par le réseau de téléphonie mobile (par les opérateurs de téléphonie mobile) détectant une connexion entre le téléphone et le réseau de téléphonie mobile (à une antenne de ce réseau). Les données spatiales et temporelles d'apprentissage comprennent les positions des antennes du réseau de téléphonie mobile auxquelles chaque téléphone se connecte et les instants auxquels ont lieu ces connexions de chaque téléphone aux antennes.

De préférence, les données spatiales et temporelles d'apprentissage peuvent être des données NSD pour « Network Signal Data » (signifiant données de signal du réseau) ou des données CDR pour « Call Detail Records » (signifiant enregistrement de détail d'appel).

Les données NSD sont générées dès qu'un téléphone se connecte à une antenne pour trouver du réseau, qu'elles qu'en soient les raisons : de ce fait, les données NSD sont enregistrées quasiment en permanence à partir du moment où le téléphone n'est pas en mode avion.

Les données CDR sont un sous-ensemble des données NSD. Les données CDR sont celles qui permettent la facturation de l'utilisateur en fonction de son utilisation du téléphone via le réseau de téléphonie mobile. De ce fait, les données CDR comprennent, de préférence exclusivement, les données d'enregistrement de transactions téléphoniques constituées d'un identifiant permettant de reconnaître le téléphone de l'utilisateur, le type d'évènement de connexion (appel, sms et/ou données d'échanges sur Internet), l'instant de l'évènement de connexion (éventuellement l'instant de début et l'instant de fin de l'évènement) ainsi que la position de l'antenne à laquelle le téléphone était connecté au moment où l'évènement a eu lieu (donc la position de l'antenne par laquelle l'évènement a transité). Comparé aux données NSD, les données CDR sont des données spatiales et temporelles très faibles car elles ne considèrent que les évènements nécessaires à la facturation par les opérateurs alors que les données NSD comprennent d'autres informations additionnelles.

Etant qualitativement très faibles en termes de précision spatiale du téléphone et de fréquence temporelle, ces données CDR sont généralement exclues des procédés pour déterminer des trajectoires d'utilisateurs et a fortiori pour déterminer des modes de transport ou les chemins sur ces trajectoires.

Néanmoins, ces données CDR et NSD offrent un taux de pénétration de la population très intéressant, notamment comparativement aux données GPS généralement utilisées, c'est-à-dire qu'elles permettent de récupérer les données d'un plus grand nombre d'utilisateurs puisqu'aujourd'hui la plupart de la population possède un téléphone portable et qu'aucune application particulière n'a besoin d'être utilisée par l'utilisateur pour accéder à ces données.

Avantageusement, on peut réaliser un pré-traitement et/ou un filtrage des données spatiales et temporelles d'apprentissage. Le filtrage peut par exemple comprendre la suppression des déplacements aberrants (qu'on peut également appeler « valeurs aberrantes"). Pour ce filtrage, on retire des déplacements aberrants parmi les données spatiales et temporelles d'apprentissage acquises à l'étape 1, au moyen d'une filtrage des déplacements aberrants. On appelle déplacement aberrant, par exemple un déplacement pour lequel il y a eu des erreurs de mesure des données de positionnement horodatées, ou qui comportent des portions de déplacement aberrantes : notamment grand détour, boucles, etc. Cette étape permet de faciliter le regroupement spatiotemporel.

On appelle déplacement, la succession des positions des antennes, dans le temps d'un même téléphone lors de ces connexions au réseau. Les déplacements sont donc issus des données spatiales et temporelles d'apprentissage.

Selon un mode de réalisation de l'invention, on peut identifier les déplacements aberrants par une méthode de partitionnement de données basée sur une distance entre les données spatiales et temporelles d'apprentissage, notamment la méthode DBSCAN (de l'anglais « density-based spatial clustering of applications with noise » pouvant être traduit par regroupement spatial basé sur la densité d'applications avec bruit), les déplacements aberrants étant ceux qui n'appartiennent pas à un regroupement formé par la méthode de partitionnement des données. D'autres méthodes analogues peuvent être mises en œuvre pour de type de filtrage.

La méthode DBSCAN permet de regrouper des ensembles de déplacements dans des clusters dans un hyperespace selon les règles suivantes :

- Pour un nouveau déplacement $X_i$ qui n'est affecté à aucun cluster, on regarde s'il y a des déplacements appartenant à un cluster déjà identifié à moins d'une distance $\varepsilon$ de $X_i$

    ○ Si oui, $X_i$ appartient au cluster le plus proche ainsi que tous les déplacements à une distance inférieure à $\varepsilon$ de $X_i$

    ○ Si non, on regarde combien il y a de déplacements situés à une distance inférieure à $\varepsilon$ de $X_i$

        ▪ S'il y en a plus de $n_{min}$, un nouveau cluster est créé et tous les déplacements à une distance inférieure à $\varepsilon$ de $X_i$ sont affectés au nouveau cluster,

        ▪ S'il y en a moins de $n_{min}$, $X_i$ est affecté au groupe des déplacements aberrants et peut encore être affecté à un cluster tant que des déplacements situés à une distance inférieure à $\varepsilon$ de $X_i$ ne sont ni affectés à un cluster, ni au groupe des déplacements aberrants.

Les hyperparamètres permettant de régler une méthode de partitionnement de données DBSCAN sont donc $\varepsilon$, qui définit la distance minimale inter-cluster, $n_{min}$ qui définit le nombre minimal d'échantillons présents dans un cluster et la mesure de distance utilisé. De manière simplifiée, si on diminue la valeur de $\varepsilon$, on augmente le nombre de clusters et le nombre de déplacements aberrants, si on diminue la valeur de $n_{min}$, on augmente le nombre de clusters et on diminue le nombre de déplacements aberrants. La méthode DBSCAN est intéressante car elle ne nécessite pas un nombre a priori de clusters à trouver, et elle permet de regrouper tout ce qui se ressemble vraiment en cluster, tant qu'il y a une certaine densité dans le nuage de déplacements, et de séparer ce qui ne ressemble à rien d'autre en déplacements aberrants.

Selon une option de réalisation de l'invention, afin de trouver les valeurs optimales des paramètres de la méthode DBSCAN, on peut opter pour le score de silhouette. Ce dernier permet d'assurer une cohésion des déplacements au sein de chaque cluster et une séparation des autres clusters. Les valeurs du score de silhouette varient de -1 à 1. Une valeur proche de 1 indique que les déplacements sont plus proches des déplacements de leur cluster que des déplacements formant les clusters voisins. Inversement, une valeur proche de -1 peut révéler que certains déplacements ont été attribués au mauvais cluster. Le score de silhouette est calculé à partir de la distance moyenne intra-cluster (a) et de la distance moyenne entre les clusters les plus proches (b). Elle est exprimée par :

$$Score\ de\ Silhouette\ =\ \frac{b\ -\ a}{\max{(a, b)}}$$

Tel que, a est la distance moyenne entre chaque déplacement à l'intérieur d'un cluster et b est la distance entre un déplacement d'un cluster et le cluster le plus proche dont le déplacement ne fait pas partie. En résumé, le score de silhouette fournit une évaluation quantitative de la qualité du clustering et permet d'avoir des clusters ayant une bonne cohésion interne et une séparation vis à vis des autres clusters.

Ensuite, l'évaluation des deux paramètres $\varepsilon$ et $n_{min}$ peut être faite en deux temps. D'abord, on peut trouver la valeur optimale de $\varepsilon$ qui correspond au meilleur score de silhouette en fixant provisoirement une valeur de $n_{min}$ du même ordre de grandeur de ce qu'on s'attend à avoir. La valeur $\varepsilon$ trouvée est utilisée pour calibrer $n_{min}$ afin d'obtenir le plus haut score de silhouette possible.

Conformément à une mise en œuvre de l'invention, pour regrouper efficacement les déplacements en fonction de leur similarité spatiale et par conséquent identifier les déplacements aberrants, on peut utiliser la distance de Fréchet qui donne une distance faible à deux déplacements qui sont très proches l'un de l'autre tout le long du trajet, et une distance forte si les déplacements s'éloignent l'un de l'autre, même s'ils sont très proches pendant la quasi-totalité du déplacement. Cette distance est souvent illustrée comme la distance minimale de la laisse nécessaire pour un maître qui promène son chien où un déplacement est le chemin du maître et l'autre déplacement est le chemin du chien.

A titre d'exemple, pour faire fonctionner l'algorithme DBSCAN, on peut calculer la distance de Fréchet entre chaque paire de déplacements de la pluralité de déplacements (éventuellement prétraité et éventuellement sélectionné). La distance de Fréchet peut être calculée en utilisant de la programmation dynamique ou peut être approximée par un réseau de neurones (comme décrit par exemple dans la demande de brevet dont le numéro de dépôt est : FR 2307300).

Le pré-traitement peut par exemple comprendre des étapes pour limiter le bruit, et/ou pour améliorer la précision de l'apprentissage. Cette étape est particulièrement utile pour améliorer la précision des résultats du procédé et du modèle réalisé à l'étape d).

Grâce au pré-traitement, on peut améliorer l'homogénéité des différentes trajectoires d'apprentissage. Pour ce faire, le pré-traitement peut consister en la formation d'un vecteur ayant un nombre de points des trajectoires d'apprentissage prédéterminé et identique pour toutes les trajectoires d'apprentissage, de manière à limiter le temps de calcul et les ressources informatiques (mémoires et processeurs) nécessaires. Ce pré-traitement est particulièrement avantageux lorsqu'on réalise un regroupement des trajectoires d'apprentissage en cluster. Le pré-traitement des trajectoires d'apprentissage peut alors être réalisé

Pour le pré-traitement, on peut par exemple convertir les données spatiales et temporelles d'apprentissage (correspondant à chaque téléphone) en un vecteur ayant un nombre de points prédéterminé. En d'autres termes, les données spatiales et temporelles d'apprentissage de chaque téléphone sont converties en un vecteur avec un nombre de points identiques pour tous les déplacements considérés. Ce prétraitement permet, grâce à cette homogénéité, de limiter le temps de calcul ainsi que les ressources informatiques (mémoire et processeur) nécessaires. En effet, chaque déplacement en fonction de sa durée et du mode de mesure peut avoir un nombre de données spatiales et temporelles d'apprentissage différent.

Selon un mode de réalisation, le nombre de points du déplacement (après prétraitement) peut être compris entre 5 et 100, et préférentiellement entre 10 et 50. Ainsi, on obtient un bon compromis entre précision de la représentation des déplacements, temps de calcul et moyens informatiques nécessaires.

Pour un déplacement, on peut noter les données spatiales et temporelles d'apprentissage acquises de la manière suivante : *trace* := $[(x_1,y_1,t_1), \ldots , (x_K,y_K,t_K)]$ où trace est le vecteur d'un déplacement, K le nombre de données spatiales et temporelles d'apprentissage du déplacement, $x_i$ la longitude du point i, $y_i$ la latitude du point i, et $t_i$ l'instant du point i.

Selon un exemple de mise en œuvre, le prétraitement peut consister en une interpolation des données spatiales et temporelles d'apprentissage sur un vecteur de temps de prétraitement de longueur prédéfini (nombre de points de déplacement), noté $[\tilde{t}_1, \ldots , \tilde{t}_N]$ avec N le nombre de points de déplacement, où les instants sont répartis de manière linéaire entre $t_1$ et $t_K$, tel que :

$$t_1 = \tilde{t}_1$$

$$t_K = \tilde{t}_N$$

$$\tilde{t}_{i+1} - \tilde{t}_i = \frac{t_K - t_1}{N-1}.$$

Puis, on peut mettre en œuvre l'interpolation en formant le nouveau vecteur *trace*<sub>interpolée</sub> pour chaque déplacement de la manière suivante :

$$trace_{interpolée} := [(\tilde{x}_1, \tilde{y}_1, \tilde{t}_1), \ldots, (\tilde{x}_N, \tilde{y}_N, \tilde{t}_N)]$$

Où $(\tilde{x}_i, \tilde{y}_i)$ est une interpolation de la longitude et de la latitude du vecteur *trace* à l'instant $\tilde{t}_i$. L'interpolation pour ce prétraitement, peut être une interpolation linéaire entre les deux points des données spatiales et temporelles d'apprentissage acquises qui entourent l'instant considéré lors du prétraitement. A titre d'exemple, pour un instant $\tilde{t}_a$ du vecteur de temps de prétraitement compris entre les instants $t_i$ et $t_{i+1}$ d'acquisition, on peut écrire respectivement pour la longitude et pour la latitude :

$$\tilde{x}_a = \frac{x_i(\tilde{t}_a - t_i) + x_{i+1}(t_{i+1} - \tilde{t}_a)}{t_{i+1} - t_i}$$

$$\tilde{y}_a = \frac{y_i(\tilde{t}_a - t_i) + y_{i+1}(t_{i+1} - \tilde{t}_a)}{t_{i+1} - t_i}$$

**Etape b)** : **discrétisation de l'espace prédétermine en zones**

Lors de cette étape, on discrétise l'espace prédéterminé en zones. Ces zones seront utilisées, aux étapes suivantes, comme zones d'origine et de destination dans le réseau de transport. Par exemple, le réseau de transport peut comprendre l'ensemble du réseau français de transport et les zones de l'espace prédéterminé peuvent être les différents départements ou les différentes régions ; alternativement, le réseau de transport peut comprendre le réseau de transport d'une certaine surface (un certain espace prédéterminé), par exemple l'Ile de France (tous transports confondus), et on peut identifier des zones comme des zones résidentielles, des zones commerciales ou industrielles pour déterminer les déplacements quotidiens des usagers de leurs lieux d'habitation vers leurs lieux de travail (ou inversement).

On peut également discrétiser les zones par une exploitation des données spatiales et temporelles d'apprentissage. En effet, on peut identifier des zones où le téléphone est resté à l'arrêt ou dans un périmètre restreint (dans un rayon de 200m par exemple) pendant un certain temps (une demi-heure ou une heure par exemple) comme zones (d'origine et/ou de destination). Utiliser les données CDR pour cette identification est intéressant car ces données permettent de toucher une plus large population et donc d'avoir un spectre plus large pour identifier les zones de l'espace prédéterminé.

La détermination des zones est particulièrement utile lorsqu'on regroupe les trajectoires d'apprentissage en cluster puisqu'on peut alors regrouper les trajectoires d'apprentissage en fonction des zones (notamment en zones d'origine et/ou de destination).

Les zones permettent également de faciliter la création du modèle réalisé à l'étape d).

Pour discrétiser l'espace prédéterminé, on peut par exemple créer des zones régulières, c'est-à-dire découper l'espace prédéterminé en carrés de côté prédéfini. Alternativement, on peut utiliser des zones standard (un quartier, une ville ou une commune, un département, par exemple) ou utiliser des zones IRIS signifiant « Ilots Regroupés pour l'Information Statistique ».

**Etape c) : détermination des trajectoires d'apprentissage pour chaque trajet défini par une zone d'origine et une zone de destination, et détermination du chemin et du mode de transport de chaque trajectoire d'apprentissage**

L'étape c) comprend deux sous étapes c1) et c2) réalisées pour chaque trajet, un trajet étant défini par une zone d'origine et une zone de destination, le trajet allant de la zone d'origine à la zone de destination (en d'autres termes, le trajet est orienté). Les zones d'origine et de destination sont choisies parmi les zones issues de la discrétisation de l'espace prédéterminé.

Ainsi, pour chaque trajet défini par une zone d'origine et une zone de destination :

c1) on détermine des trajectoires d'apprentissage du trajet, à partir des données spatiales et temporelles d'apprentissage acquises, chaque trajectoire d'apprentissage correspondant à la succession de positions des antennes auxquelles un des téléphones s'est connecté et les instants de ces connexions. Ainsi, pour un trajet, on identifie plusieurs trajectoires d'apprentissage reliant la zone d'origine à la zone de destination du trajet concerné. Ces différentes trajectoires peuvent être liées à différents modes de transport ou à différents chemins possibles pour un même mode de transport.

c2) puis on détermine, pour chaque trajectoire d'apprentissage déterminée, le chemin parcouru sur le réseau de transport et le mode de transport associé, le chemin parcouru étant une succession de brins du réseau de transport à des instants de passage. En effet, en fonction par exemple de la vitesse moyenne de transport, on peut discriminer différents modes de transport : par exemple, la vitesse de la marche à pied (environ 5km/h) est inférieure à celle du vélo ou de la trottinette, elle-même inférieure à celle du bus ou du tramway, elle-même inférieure à celle de la voiture. On peut également identifier un mode de transport lorsqu'un brin du réseau identifie directement un brin d'un mode de transport spécifique (par exemple le métro). On peut également mettre en œuvre la méthode d'identification du mode de transport et du chemin parcouru définie dans la demande de brevet de la demanderesse FR 3130488 A1 pour chaque trajectoire d'apprentissage.

De manière avantageuse, on peut affecter un premier coefficient de redressement aux trajectoires d'apprentissage en fonction des utilisateurs des téléphones pour lesquels les données spatiales et temporelles d'apprentissage ont été acquises à l'étape a). Par exemple, on peut classifier les données spatiales et temporelles d'apprentissage en fonction de l'utilisateur du téléphone. Les différentes classifications peuvent être les suivantes : sexe, âge, catégorie sociale de l'utilisateur. En fonction de la répartition des utilisateurs dans ces différentes classifications et par comparaison à d'autres données connues par ailleurs, on peut redresser les données spatiales et temporelles d'apprentissage ou les trajectoires d'apprentissage pour corriger les erreurs qui seraient induites par les données brutes. En d'autres termes, en affectant un premier coefficient de redressement, on peut corriger mathématiquement les données statistiques acquises pour mieux représenter la population réelle.

Selon un mode de réalisation avantageux de l'invention, à l'étape c1), on peut regrouper différentes trajectoires d'apprentissage déterminées en clusters de trajectoires d'apprentissage. Le regroupement en cluster permet de limiter le nombre d'itérations de l'étape c2) et donc de réduire le temps de calcul et la mémoire informatique nécessaire. En effet, en regroupant les trajectoires d'apprentissage en cluster, on peut réaliser l'étape c2) seulement pour une trajectoire de chaque cluster.

De préférence, on peut regrouper les trajectoires d'apprentissage au moyen d'une méthode de regroupement agglomératif basé sur une distance spatio-temporelle, ladite distance spatio-temporelle étant une somme pondérée d'une distance spatiale entre deux trajectoires d'apprentissage et une distance temporelle fonction de la différence de durée entre les deux trajectoires d'apprentissage, ladite distance spatiale et la distance temporelle étant déterminées à partir des données spatiales et temporelles d'apprentissage, les groupements différenciant les vitesses et les trajectoires. La prise en compte de données spatiales et temporelles permet de former, en une seule étape, des regroupements différenciant des trajets de vitesses différentes et de chemins différentes. Autrement dit, chaque regroupement comprend des trajectoires empruntant des chemins similaires à des vitesses similaires, ce qui permet notamment de discriminer un trajet à vélo, d'un trajet voiture dans un trafic congestionné qui prendraient autant de temps, mais qui ne sont pas réalisés au même rythme (la voiture va aller vite dans certains endroits et très lentement dans d'autres, alors que le vélo sera beaucoup plus régulier).

Une méthode de regroupement agglomératif est une méthode de regroupement hiérarchique qui fusionne des clusters dans l'ordre de leur degré de similitude jusqu'à atteindre un nombre de groupements prédéterminé, noté ici $N_{clust,agg}$.

Selon un mode de réalisation, on peut déterminer la distance spatiotemporelle au moyen de la formule suivante : $d_{spat,temp} = d_{spat} + \lambda d_t$ avec $d_{spat,temp}$ la distance spatiotemporelle, $d_t$ la distance temporelle, $\lambda$ un scalaire de pondération, qui souligne l'importance du temps de déplacement (le déplacement correspondant à une trajectoire considérée).

Les hyperparamètres à régler pour la méthode de regroupement agglomératif peuvent être le nombre de groupements requis $N_{clust,agg}$ et la pondération $\lambda$ qui permet de donner plus ou moins d'importance au temps de déplacement dans le clustering. Le choix du paramètre $\lambda$ peut dépendre du type de l'information groupée souhaitée (clustering majoritairement temporel, spatial, ou spatio-temporel).

A titre d'exemple non limitatif, on peut choisir la pondération $\lambda$ entre $10^{-6}$ et $10^{-1}$. Pour chaque valeur de la pondération, on peut alors déterminer un score de silhouette (pour rappel, calculé à partir de la distance moyenne intra-cluster et de la distance moyenne entre les clusters les plus proches) calculé pour $N_{clust,agg}$ = 1 à 40 groupements. La combinaison de $\lambda$ et $N_{clust,agg}$ donnant le meilleur score de silhouette peut alors être choisie.

Pour le mode de réalisation pour lequel les données spatiales et temporelles d'apprentissage sont prétraitées, on peut déterminer la distance spatiale au moyen de la formule suivante :

$$d_{spat}(X_i, X_j) = \frac{1}{N} \sum_{k=1}^{N} d_{haversine}\left(\left(\tilde{x}_{i,k}, \tilde{y}_{i,k}\right), \left(\tilde{x}_{j,k}, \tilde{y}_{j,k}\right)\right)$$

avec $X_i$ le trajet i, $X_j$ le trajet j, $d_{spat}$ la distance spatiale, N le nombre de points du déplacement, $d_{haversine}$ une distance géodésique entre deux points, $(\tilde{x}_{i,k}, \tilde{y}_{i,k})$ les coordonnées du k-ième point du déplacement i, $(\tilde{x}_{j,k}, \tilde{y}_{j,k})$ les coordonnées du k-ième point du déplacement j.

Pour le mode de réalisation pour lequel les données spatiales et temporelles d'apprentissage sont prétraitées, on peut déterminer la distance temporelle au moyen de la formule suivante :

$$d_t(X_i, X_j) = \frac{\left(\left(\tilde{t}_{i,N} - \tilde{t}_{i,1}\right) - \left(\tilde{t}_{j,N} - \tilde{t}_{j,1}\right)\right)^2}{2}$$

avec $X_i$ le déplacement i, $X_j$ le déplacement j, $d_t$ la distance temporelle, N le nombre de points du déplacement, $\tilde{t}_{i,N}$ l'instant du dernier point du déplacement i, $\tilde{t}_{i,1}$ l'instant du premier point du déplacement i, $\tilde{t}_{j,N}$ l'instant du dernier point du déplacement j, $\tilde{t}_{j,1}$ l'instant du premier point du déplacement j.

Selon une variante avantageuse de l'invention, on peut construire des graphes de transport pour chaque mode de transport, chaque graphe de transport comprenant des nœuds, des portions de route reliant les différents nœuds et les vitesses moyennes de déplacement sur chaque portion de route, chaque portion de route du graphe de transport représentant les routes possibles par le mode de transport associé, la superposition des graphes de transport formant le réseau de transport, chaque brin du réseau de transport correspondant à au moins une desdites portions de route d'au moins un desdits graphes de transport, puis :

i) à partir des données spatiales et temporelles d'apprentissage acquises, on peut déterminer une succession de couples emplacements-instants définis par des emplacements correspondant aux positions des antennes issues des données spatiales et temporelles d'apprentissage acquises et par les instants correspondant à ces emplacements et on peut former au moins une sous-route reliant deux couples emplacements-instants successifs, une succession des sous-routes déterminant une trajectoire d'apprentissage ;

ii) Pour chaque graphe de transport, on peut déterminer les positions successives du téléphone sur des nœuds identifiés successifs du graphe de transport à partir des couples emplacements-instants, les nœuds identifiés successifs étant positionnés le plus près possible de chaque emplacement ;

iii) Puis pour chaque graphe de transport et pour chaque sous-route, on peut déterminer, par des optimisations de plus court chemin, un nombre prédéterminé de chemins possibles permettant de relier les différents nœuds identifiés successifs par des portions de route, chaque chemin possible comprenant les nœuds de passage reliant toutes les portions de route du chemin possible, et on peut calculer l'instant de passage de chaque nœud de passage à partir des vitesses moyennes associées à chaque portion de route, chaque chemin possible étant déterminé par la liste de tous les couples nœuds de passage - instants de passages dudit chemin possible ;

iv) on peut déterminer un indice de corrélation entre chacun des chemins possibles déterminés et la trajectoire d'apprentissage, l'indice de corrélation étant représentatif de la proximité spatiale et/ou de la proximité temporelle de chaque nœud identifié successif avec les emplacements de la trajectoire d'apprentissage ; et

v) on peut déterminer le mode de transport de chaque trajectoire d'apprentissage, par détermination du mode de transport qui optimise l'indice de corrélation de la trajectoire d'apprentissage, le chemin parcouru correspondant au chemin possible optimisant l'indice de corrélation.

Ces étapes permettent de reconstruire le chemin de l'utilisateur (du téléphone de l'utilisateur) à partir de données spatiales et temporelles d'apprentissage acquises de résolution très faible, ce qui rend ce procédé transposable à d'autres données qui pourraient être mesurées avec une résolution spatiale et/ou temporelle supérieure.

Alternativement, on peut appliquer la méthode d'identification du mode de transport suivante :

- On détermine le mode de transport de chaque trajectoire (ou de chaque groupement de trajectoires) en fonction de la vitesse des trajectoires (éventuellement de chaque groupement) et/ou par interpolation d'un mode de transport connu d'au moins une trajectoire appartenant au groupement (i.e. si on connait le mode de transport d'au moins une trajectoire appartenant au groupement, alors on applique ce mode de transport à l'ensemble des trajectoires du groupement) et/ou en fonction de la trajectoire du groupement ; et
- On peut de préférence attribuer à chaque trajectoire du groupement le mode de transport du groupement.

Ce procédé présente l'avantage de déterminer le mode de transport d'un grand nombre de trajectoires de manière simple, avec un temps de calcul réduit, et avec des besoins en ressources informatiques (mémoire et processeur) limitées. De plus, en raison du regroupement par trajectoire et vitesse, la détermination du mode de transport est plus précise.

Ces étapes peuvent être mises en œuvre par des moyens informatiques, notamment un ordinateur ou un serveur, comprenant au moins un processeur et une mémoire informatique.

L'étape de détermination du mode de transport de chaque groupement peut consister à :

- Comparer la vitesse des trajectoires de chaque groupement (pouvant être obtenue par la distance de la trajectoire et par la durée moyenne des trajectoires du groupement, ou par une mesure de la vitesse simultanément aux mesures de données spatiales et temporelles acquises) avec une vitesse représentative des modes de transport : par exemple marche à pied environ 5 km/h, course à pied environ 10 km/h, bicyclette environ 20 km/h, véhicule motorisé en ville entre 30 et 50 km/h, etc., et/ou
- Identifier au moins une trajectoire du groupement pour lequel le mode de transport est connu, par exemple au moyen d'une étape d'acquisition du mode de transport, et/ou
- Identifier la typologie des chemins emprunté par la trajectoire du groupement, par exemple : s'il s'agit d'une autoroute, le mode de transport est un véhicule motorisé, s'il s'agit d'un chemin, le mode de transport est un mode de transport de mobilité douce.

De plus, ces étapes peuvent permettre d'identifier les infrastructures routières à mettre en place et/ou les réseaux de transport (mobilité douce ou transports en commun) à développer. Le procédé permet également de suivre l'évolution dans le temps des choix de mode de transport des utilisateurs dans une zone géographique donnée, en fonction par exemple de la mise en place des infrastructures routières ou des réseaux de transport.

Dans la présente demande, la notion de « succession » ou « successif » indique une succession dans le temps (temporelle). Par exemple, deux emplacements sont successifs s'il s'agit de deux emplacements qui ont été identifiés temporellement l'un après l'autre.

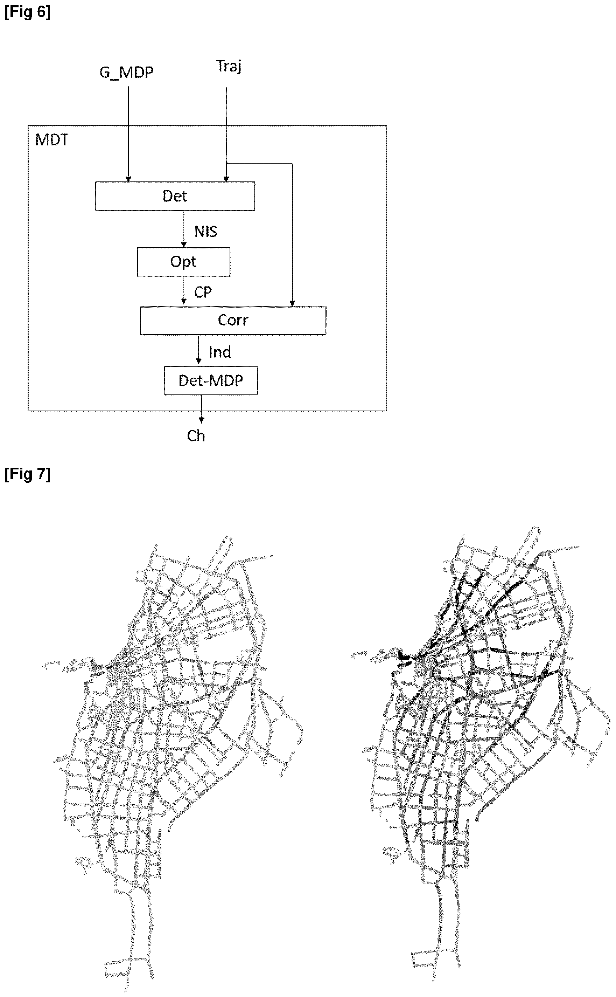

La figure 6 illustre, de manière schématique et non limitative, un exemple d'étape d'identification du mode de transport et du chemin du procédé de détermination du nombre d'utilisations de différents modes de transport sur au moins un brin d'un réseau de transport au sein d'un espace prédéterminé selon l'invention.

On construit des graphes de transport G_MDP pour chaque mode de transport, chaque graphe de transport comprenant des nœuds, des portions de route reliant les différents nœuds et les vitesses moyennes de déplacement sur chaque portion de route. Chaque portion de route du graphe de transport G_MDP représente les routes possibles par le mode de transport associé. La superposition des graphes de transport forme le réseau de transport et chaque brin du réseau de transport correspond à au moins une des portions de route d'au moins un des graphes de transport.

A partir de chaque trajectoire d'apprentissage Traj et de graphes de transport G_MDP, on détermine Det les nœuds identifiés successifs NIS de chaque graphe de transport G_MDP, comme des nœuds du graphe de transport considéré comme les plus proches des positions des antennes auxquelles le téléphone s'est connecté sur le trajet (on peut également ne considérer que certaines de ces positions au lieu de toutes les considérer), tout en étant reliés les uns aux autres (autrement dit, il existe des portions de route permettant de relier les différents nœuds identifiés successifs entre eux).

A partir des nœuds identifiés successifs NIS, on réalise une optimisation des plus courts chemins Opt pour chaque sous-route de chaque graphe de transport de manière à identifier un nombre prédéterminé de chemins possibles CP pour chaque mode de transport.

Puis on évalue la corrélation Corr entre chaque chemin possible CP de chaque mode de transport et la trajectoire d'apprentissage Traj, composé des sous-routes et on détermine un indice de corrélation Ind. En optimisant la corrélation (via l'indice de corrélation Ind), on peut déterminer Det-MDP la donnée de sortie Ch qui comprend le mode de transport et le chemin parcouru sur le réseau de transport par l'utilisateur pour la trajectoire d'apprentissage concernée.

Les étapes décrites ci-dessus peuvent être mises en œuvre par des moyens informatiques, par exemple un ordinateur.

De préférence, on peut extraire un sous-graphe de chaque graphe de transport, le sous-graphe étant une partie du graphe de transport limitée à une largeur prédéterminée autour de chaque sous-route déterminée à l'étape i) et on peut utiliser le sous-graphe au lieu du graphe de transport pour chacune des étapes ii) à v). De ce fait, le sous-graphe présente un nombre limité de nœuds et de portions de route, ce qui permet de faciliter la détermination du mode de transport et d'autre part, de limiter les chemins possibles déterminés à l'étape iii). Ainsi, on peut rapidement obtenir de nombreuses informations sur les modes de transport choisis par les utilisateurs en fonction de leur trajet et également les évolutions de ces informations dans le temps. De ce fait, il est plus facile de traiter les données, d'augmenter l'efficacité et la rapidité de la méthode, et de limiter la mémoire informatique nécessaire pour la mise en œuvre de l'invention par ordinateur.

**Etape d) : réalisation d'un modèle du nombre d'utilisations de chaque mode de transport sur ledit au moins un brin du réseau de transport**

A partir des chemins et des modes de transports déterminés à l'étape c2) sur les trajectoires d'apprentissage des différents trajets entre les zones d'origine et les zones de destination, on réalise un modèle du nombre d'utilisations (ou du débit d'utilisateurs ou d'utilisations, aussi appelé fréquence, ou un taux d'utilisation) de chaque mode de transport sur au moins un brin du réseau de transport concerné. Ce modèle relie les trajectoires à un nombre d'utilisations (ou du débit d'utilisateurs ou d'utilisations, aussi appelé fréquence, ou un taux d'utilisations) de chaque mode de transport sur le brin du réseau de transport concerné. En d'autres termes, les trajectoires d'apprentissage et les chemins et modes de transport associés et déterminés à l'étape c2) sont utilisés pour créer le modèle du nombre d'utilisations de chaque mode de transport sur le brin du réseau de transport concerné. L'intérêt de ce modèle est de pouvoir déterminer, très rapidement et en limitant le besoin de mémoire informatique et de processeur, l'impact des débits de déplacements sur les brins du réseau de transport, à partir de nouvelles données (par exemple de nouvelles trajectoires, c'est-à-dire des trajectoires différentes des trajectoires d'apprentissage). Les nouvelles données peuvent par exemple prendre en compte des modifications envisagées sur le réseau de transport (modifications ou ajouts de voies, modifications de carrefours, limitation de vitesse). Elles peuvent également prendre en compte des données sur d'autres tranches horaires ou d'autres jours que les trajectoires d'apprentissage. Grâce au modèle, on peut s'affranchir d'appliquer les étapes b) et c) pour les nouvelles données, ces étapes étant longues et nécessitant une quantité de mémoire et de processeurs importants. Ainsi, on peut tester différentes configurations et évaluer rapidement l'impact en termes de débit d'utilisateurs ou d'émissions polluantes (gaz à effet de serre, comme le dioxyde de carbone par exemple, et/ou particules polluantes exemple) sur un brin du réseau de transport. Les nouvelles données correspondent à la matrice de données utilisant dans les étapes suivantes.

Par exemple, pour réaliser le modèle du nombre d'utilisations de chaque mode de transport sur le brin concerné du réseau de transport, on peut réaliser les étapes suivantes :

d1) pour chaque trajet, on identifie un premier nombre de trajectoires d'apprentissage liées à chaque mode de transport. Ainsi, pour chaque trajet d'une zone d'origine à une zone de destination, on compte le nombre de trajectoires d'apprentissage de chaque mode de transport, ce nombre définissant le premier nombre de chaque mode de transport ;

Le premier nombre $f_{A,B,M}$ de trajectoires d'apprentissage du trajet reliant la zone d'origine A à la zone de destination B par le mode de transport M peut notamment être défini de la manière suivante :

$$f_{A,B,M} = \sum_{j \in \Omega_{A,B}} w_j \cdot 1_{c_j = M}$$

Où $1_{expr}$ est l'indicateur qui vaut 1 si *expr* est vrai et 0 sinon. En l'espèce, $1_{c_j=M}$ est égal à 1 si le mode de transport est le mode de transport M et il est égal à 0 s'il correspond à un autre de transport différent du mode de transport M.

$w_j$ correspond au nombre de trajectoires d'apprentissage du mode de transport concerné, éventuellement corrigé par un coefficient de redressement.

$\Omega_{A,B}$ correspondant à l'ensemble des trajectoires reliant la zone d'origine A à la zone de destination B.

d2) pour chaque trajet, on identifie un deuxième nombre de trajectoires d'apprentissage liées à chaque mode de transport et passant par le brin concerné du réseau de transport. Ainsi, pour chaque trajet d'une zone d'origine à une zone de destination, on compte le nombre de trajectoires d'apprentissage de chaque mode de transport qui passe par le brin concerné, ce nombre définissant le deuxième nombre de chaque mode de transport passant par le brin concerné.

Le deuxième nombre $f_{A,B,M,b_l}$ de trajectoires d'apprentissage du trajet reliant la zone d'origine A à la zone de destination B par le mode de transport M et passant par le brin $b_l$ du réseau de transport peut notamment être défini de la manière suivante :

$$f_{A,B,M,b_l} = \sum_{j \in \Omega_{A,B}} w_j 1_{c_j=M} 1_{b_l \in B_j}$$

Où $1_{expr}$ est l'indicateur qui vaut 1 si *expr* est vrai et 0 sinon. En l'espèce, :

-   $1_{c_j=M}$ est égal à 1 si le mode de transport est le mode de transport M et il est égal à 0 s'il correspond à un autre de transport différent du mode de transport M ;
-   $1_{b_l \in B_j}$ est égal à 1 si le brin considéré $b_l$ appartient au chemin $B_j$ identifié pour la trajectoire d'apprentissage (le chemin $B_j$ comprenant une suite de brins du réseau de transport) et il est égal à 0 si le chemin $B_j$ ne comprend pas le brin $B_j$.

$w_j$ correspond au nombre de trajectoires d'apprentissage du mode de transport concerné, éventuellement corrigé par un coefficient de redressement tel qu'explicité précédemment. $\Omega_{A,B}$ correspondant à l'ensemble des trajectoires reliant la zone d'origine A à la zone de destination B.

d3) puis pour chaque trajet, on détermine la proportion de trajectoires d'apprentissage liées à chaque mode de transport et passant par le brin concerné du réseau de transport, cette proportion étant, pour chaque mode de transport, le rapport entre le deuxième nombre et le premier nombre ; cette proportion est particulièrement intéressante car elle évolue peu au cours du temps. Ainsi, on peut utiliser cette proportion qui devient une caractéristique intrinsèque de la répartition des différents modes de transport de chaque trajet et du passage sur le brin concerné.

Par exemple, la proportion $q_{A,B,M,b_l}$ de trajectoires d'apprentissage du trajet reliant la zone d'origine A à la zone de destination B par le mode de transport M et passant par le brin $b_l$ du réseau de transport peut être déterminée par :

$$q_{A,B,M,b_l} = \frac{f_{A,B,M,b_l}}{f_{A,B,M}}$$

Avec $f_{A,B,M,b_l}$ le deuxième nombre de trajectoires d'apprentissage du trajet reliant la zone d'origine A à la zone de destination B par le mode de transport M et passant par le brin $b_l$ du réseau de transport

Et $f_{A,B,M}$ le premier nombre de trajectoires d'apprentissage du trajet reliant la zone d'origine A à la zone de destination B par le mode de transport M.

d4) on réalise le modèle du nombre d'utilisations de chaque mode de transport sur le brin concerné du réseau de transport à partir de l'équation suivante :

$$\hat{f}_{M,b_l} = \sum_{A \in \Gamma} \sum_{B \neq A \in \Gamma} q_{A,B,M,b_l} \tilde{f}_{A,B,M}$$

avec $\hat{f}_{M,b_l}$ le nombre d'utilisations du mode de transport prédéterminé M passant par ledit au moins un brin $b_l$ du réseau de transport

$q_{A,B,M,b_l}$ la proportion calculée à l'étape d3) pour chaque trajet partant de la zone d'origine A vers la zone de destination B du mode de transport prédéterminé M passant par ledit au moins un brin $b_l$ du réseau de transport

$\tilde{f}_{A,B,M}$ le nombre de déplacements (de la matrice de données) du trajet partant de la zone d'origine A vers la zone de destination B pour le mode de transport M prédéterminé.

$\Gamma$ étant l'espace du réseau de transport considéré qui comprend l'ensemble des zones d'origine et l'ensemble des zones de destination.

Par conséquent, le nombre d'utilisations $\hat{f}_{M,bl}$ du mode de transport prédéterminé M passant par ledit au moins un brin $b_l$ du réseau de transport est la somme sur tous les trajets allant des différentes zones d'origine A aux différentes zones de destination B, du produit de la proportion concerné et du nombre de déplacements de la matrice de données du trajet partant de la zone d'origine A vers la zone de destination B pour le mode de transport M prédéterminé.

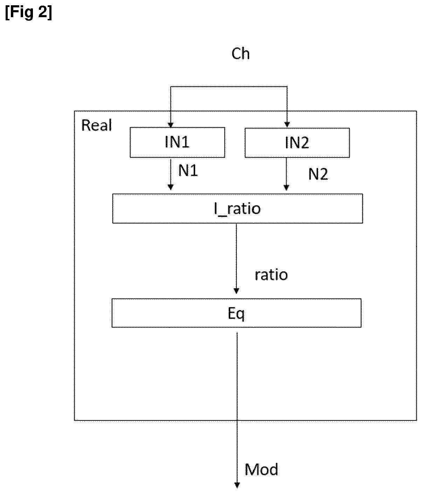

La figure 2 illustre, de manière schématique et non limitative, un exemple de réalisation du modèle du nombre d'utilisations de chaque mode de transport sur le brin considéré du réseau de transport du procédé de détermination du nombre d'utilisations de différents modes de transport sur le brin considéré d'un réseau de transport au sein d'un espace prédéterminé selon l'invention.

Dans cet exemple, on construit Real le modèle Mod du nombre d'utilisations de chaque mode de transport sur un brin du réseau de transport à partir des données de sortie Ch, qui comprennent, pour chaque trajectoire d'apprentissage, le chemin parcouru sur le réseau de transport (comme une succession de brins sur le réseau de transport) et le mode de transport associé.

Pour ce faire, à partir des données de sortie Ch, pour chaque trajet, on identifie IN1 un premier nombre N1 et on identifie IN2 un deuxième nombre N2.

Le premier nombre N1 correspond pour chaque trajet, au nombre de trajectoires d'apprentissage liées à chaque mode de transport.

Le deuxième nombre N2 correspond pour chaque trajet, au nombre de trajectoires d'apprentissage liées à chaque mode de transport et passant par le brin considéré du réseau de transport.

A partir des premier et deuxième nombres pour chaque trajet, pour chaque trajet, on détermine I_ratio la proportion ratio de trajectoires d'apprentissage liées à chaque mode de transport et passant par le brin considéré du réseau de transport, cette proportion ratio étant, pour chaque mode de transport et chaque trajet, le rapport entre le deuxième nombre N2 et le premier nombre N1.

On peut alors établir Eq le modèle Mod à partir de la proportion ratio et de nouvelles données (appelées matrice de données à l'étape e)).

**Etape e)** : **acquisition d'une matrice de données et application de la matrice de données au modèle du nombre d'utilisations pour chaque mode de transport sur le brin considéré du réseau de transport.**

Lors de cette étape, on acquiert une matrice de données. Cette matrice de données peut donner, pour chaque trajet d'une zone d'origine vers une zone de destination, le nombre de déplacements réalisés (sur une durée prédéterminée par exemple). Il peut s'agir du nombre total de déplacements réalisés (tous modes de transport confondus) ou du nombre de déplacements réalisés de chaque type de mode de transport. Cette matrice de données peut être obtenue de différentes manières : par exemple en utilisant des données CDR, NSD, par mesure de véhicules sur des portions de route, par des enquêtes etc... Cette matrice de données peut notamment être déterminée à un moment distinct des données utilisées pour les trajectoires d'apprentissage ou être issue d'une projection prenant en compte une modification sur le réseau de transport.

La matrice de données peut par exemple être déterminée à partir de deuxièmes trajectoires qui sont de nouvelles trajectoires, distinctes des trajectoires d'apprentissage. Ces deuxièmes trajectoires peuvent correspondre à des modifications envisagées ou apportées du réseau de transport et/ou des trajectoires acquises à des horaires et/ou des jours différents des trajectoires d'apprentissage.

On applique ensuite la matrice de données (qui peut être déterminée à partir des deuxièmes trajectoires par exemple) au modèle du nombre d'utilisations (ou du débit d'utilisateurs ou d'utilisations, aussi appelé fréquence, ou un taux d'utilisations) pour chaque mode de transport sur le brin considéré du réseau de transport pour déterminer le nombre d'utilisations (ou du débit d'utilisateurs ou d'utilisations, aussi appelé fréquence, ou un taux d'utilisations) de chaque mode de transport sur ce brin du réseau de transport à partir de la matrice de données (et/ou des éventuelles deuxièmes trajectoires).

Avantageusement, on peut acquérir des deuxièmes données spatiales et temporelles de connexion de téléphones au réseau de téléphonie mobile, les deuxièmes données spatiales et temporelles comprenant les positions des antennes du réseau de téléphonie mobile auxquelles chaque téléphone s'est connecté et les instants auxquels ont eu lieu ces connexions de chaque téléphone aux antennes.

Les deuxièmes données spatiales et temporelles peuvent être des données NSD et préférentiellement elles peuvent être des données CDR, telles que définies précédemment. On peut ensuite, à partir des deuxièmes données spatiales et temporelles, déterminer des deuxièmes trajectoires et à partir de ces deuxièmes trajectoires, on peut construire une matrice de données qui définit, pour chaque trajet d'une zone d'origine vers une zone de destination, le nombre de déplacements réalisés pour chaque type de mode de transport (sur une durée prédéterminée par exemple). On forme ainsi la matrice de données.

De préférence, on peut affecter un deuxième coefficient de redressement aux deuxièmes trajectoires en fonction des utilisateurs des téléphones pour lesquels les deuxièmes données spatiales et temporelles ont été acquises. Par exemple, on peut classifier les deuxièmes données spatiales et temporelles en fonction de l'utilisateur du téléphone. Les différentes classifications peuvent être les suivantes : sexe, âge, catégorie sociale de l'utilisateur. En fonction de la répartition des utilisateurs dans ces différentes classes et par comparaison à d'autres données connues par ailleurs, on peut redresser les deuxièmes données spatiales et temporelles ou les deuxièmes trajectoires pour corriger les erreurs qui seraient induites par les données brutes. En d'autres termes, en affectant un deuxième coefficient de redressement, on peut corriger mathématiquement les données statistiques acquises pour mieux représenter la population réelle.

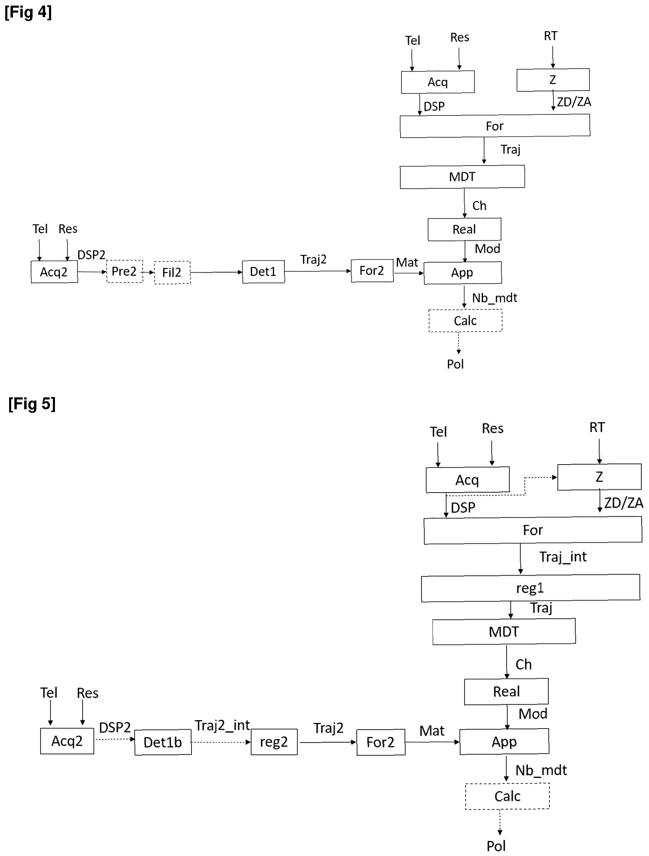

La figure 4 illustre, de manière schématique et non limitative, un troisième mode de réalisation du procédé de détermination du nombre d'utilisations de différents modes de transport sur au moins un brin d'un réseau de transport au sein d'un espace prédéterminé selon l'invention.

Sur cette figure, les éléments et références identiques à la figure 1 correspondent aux mêmes éléments et références que la figure 1 et ne sont donc pas redétaillés.

Dans ce mode de réalisation, pour déterminer For2 la matrice de données Mat, on acquiert Acq2 des deuxièmes données spatiales et temporelles DSP2 à partir des données de connexion de téléphones Tel du réseau de téléphonie mobile Res.

Ces deuxièmes données spatiales et temporelles DSP2 sont utilisées pour déterminer Det1 les deuxièmes trajectoires Traj2, à partir desquelles on détermine For2 la matrice de données Mat.

Avant l'étape de détermination Det1 des deuxièmes trajectoires Traj2, on peut réaliser une étape de pré-traitement Pre2 et/ou une étape de filtrage Fil2 des deuxièmes données spatiales et temporelles DSP2. Ces étapes de pré-traitement Pre2 et de filtrage Fil2 peuvent être identiques aux étapes de pré-traitement et de filtrage (dénommées respectivement Pre et Fil dans la figure 3) appliquées aux données spatiales et temporelles d'apprentissage DSP.

De préférence, les deuxièmes données spatiales et temporelles DSP2 sont du même type que les données spatiales et temporelles d'apprentissage DSP (par exemple ce sont des données NSD et préférentiellement, ce sont des données CDR).

On peut réaliser l'étape de pré-traitement Pre2 avant l'étape de filtrage Fil2 comme illustré sur la figure 4, ou dans l'ordre inverse.

Bien entendu, toutes les étapes décrites peuvent être réalisées sur plusieurs brins du réseau de transport, voir sur tous les brins du réseau de transport.

La figure 5 illustre, de manière schématique et non limitative, un quatrième mode de réalisation du procédé de détermination du nombre d'utilisations de différents modes de transport sur au moins un brin d'un réseau de transport au sein d'un espace prédéterminé selon l'invention.

Sur cette figure, les éléments et références identiques à la figure 1 correspondent aux mêmes éléments et références que la figure 1 et ne sont donc pas redétaillés.

Dans ce mode de réalisation, pour déterminer les trajectoires d'apprentissage Traj, on acquiert Acq des données spatiales et temporelles d'apprentissage DSP à partir des données de connexion de téléphones Tel du réseau de téléphonie mobile Res.

Ces données spatiales et temporelles d'apprentissage DSP sont utilisées pour déterminer For les trajectoires d'apprentissage intermédiaires Traj_int qui sont l'ensemble des trajectoires correspondantes aux données spatiales et temporelles d'apprentissage DSP (une trajectoire d'apprentissage intermédiaire pour chaque téléphone). Puis on regroupe reg1 les trajectoires d'apprentissage intermédiaires Traj_int en clusters qui forment alors les trajectoires d'apprentissage Traj qui sont utilisées dans l'étape d'identification MDT du mode de transport et du chemin parcouru sur le réseau de transport. Cela permet de limiter le nombre de trajectoires d'apprentissage auxquelles on identifie MDT le mode de transport et le chemin et donc également de limiter le nombre de trajectoires d'apprentissage pour l'étape de construction Real du modèle Mod.

Dans ce mode de réalisation, pour déterminer la matrice de données Mat, on acquiert Acq2 des deuxièmes données spatiales et temporelles DSP2 à partir des données de connexion de téléphones Tel du réseau de téléphonie mobile Res.

Ces deuxièmes données spatiales et temporelles DSP2 sont utilisées pour déterminer Det1b les deuxièmes trajectoires intermédiaires Traj2_int qui sont l'ensemble des trajectoires correspondantes aux deuxièmes données spatiales et temporelles DSP2 (une trajectoire intermédiaire pour chaque téléphone). Puis on regroupe reg2 les deuxièmes trajectoires intermédiaires Traj2_int en clusters qui forment alors les deuxièmes trajectoires Traj2, utilisées pour déterminer For2 la matrice de données Mat. La matrice de données Mat est ensuite utilisée dans l'étape d'application App du modèle Mod. Cela permet de limiter le nombre de trajectoires auxquelles on applique App le modèle Mod.

Lors des étapes de regroupement reg1 et reg2, les trajectoires de sortie (respectivement les trajectoires d'apprentissage Traj et les deuxièmes trajectoires Traj2), qui sont chacune un cluster de trajectoires, sont affectées d'un nombre de trajectoires correspondantes aux nombres de trajectoires intermédiaires regroupées dans le cluster concerné, de manière à pouvoir comptabiliser le nombre de trajectoires similaires de chaque cluster, et ainsi de déterminer le nombre d'utilisations de chaque mode de transport du brin concerné du réseau de transport.

Avant l'étape de détermination Det1b des deuxièmes trajectoires intermédiaires Traj2_int, on peut réaliser une étape de pré-traitement et/ou une étape de filtrage des deuxièmes données spatiales et temporelles DSP2. Ces étapes de pré-traitement et de filtrage des deuxièmes données spatiales et temporelles DSP2 peuvent être identiques aux étapes de pré-traitement et de filtrage des deuxièmes données spatiales et temporelles DSP2 (dénommées respectivement Pre2 et Fil2 dans la figure 4) et peuvent être identiques aux étapes de pré-traitement et de filtrage appliquées aux données spatiales et temporelles d'apprentissage (dénommées respectivement Pre et Fil dans la figure 3).

De préférence, les deuxièmes données spatiales et temporelles DSP2 sont du même type que les données spatiales et temporelles d'apprentissage DSP (par exemple ce sont des données NSD et préférentiellement, ce sont des données CDR).

On peut réaliser l'étape de pré-traitement avant l'étape de filtrage comme illustré sur la figure 4, ou dans l'ordre inverse.

Bien entendu, toutes les étapes décrites peuvent être réalisées sur plusieurs brins du réseau de transport, voir sur tous les brins du réseau de transport.

Bien entendu, les différents modes de réalisation des figures 1, 3, 4 et 5 peuvent être combinés entre eux (deux à deux, trois à trois ou tous ensemble) sans sortir du cadre de l'invention.

Selon un mode de réalisation avantageux de l'invention, on peut regrouper les deuxièmes trajectoires en clusters de deuxièmes trajectoires. Le regroupement en clusters permet de limiter le nombre d'itérations et donc de réduire le temps de calcul et la mémoire informatique nécessaire. En effet, en regroupant les deuxièmes trajectoires en clusters, on peut réaliser l'étape e) seulement pour une deuxième trajectoire de chaque cluster.

De préférence, on peut regrouper les deuxièmes trajectoires au moyen d'une méthode de regroupement agglomératif basé sur une distance spatio-temporelle, ladite distance spatio-temporelle étant une somme pondérée d'une distance spatiale entre deux deuxièmes trajectoires et une distance temporelle fonction de la différence de durée entre les deux deuxièmes trajectoires, ladite distance spatiale et la distance temporelle étant déterminées à partir des deuxièmes données spatiales et temporelles, les groupements différenciant les vitesses et les trajectoires. La prise en compte de données spatiales et temporelles permet de former, en une seule étape, des regroupements différenciant des trajets de vitesses différentes et de chemins différentes. Autrement dit, chaque regroupement comprend des deuxièmes trajectoires empruntant des chemins similaires à des vitesses similaires, ce qui permet notamment de discriminer un trajet à vélo, d'un trajet voiture dans un trafic congestionné qui prendraient autant de temps, mais qui ne sont pas réalisés au même rythme (la voiture va aller vite dans certains endroits et très lentement dans d'autres, alors que le vélo sera beaucoup plus régulier).

Lorsque des regroupements ont déjà été réalisés sur les trajectoires d'apprentissage, il est également possible d'utiliser les trajectoires d'apprentissage résultant de ces regroupements, c'est-à-dire de réutiliser les clusters de trajectoires d'apprentissage, pour les deuxièmes trajectoires. On peut associer chacune des deuxièmes trajectoires au cluster le plus proche parmi les trajectoires d'apprentissage. Ainsi, on peut associer un chemin et le mode de transport à chaque deuxième trajectoire.

Selon une configuration de l'invention, on peut afficher le nombre d'utilisations (ou du débit, ou du taux ou de la fréquence d'utilisations ou des utilisateurs) de chaque mode de transport passant par l'au moins un brin du réseau de transport, de préférence, par au moins un groupe de brins du réseau de transport et de manière encore préférée par tous les brins du réseau de transport, sur une carte représentative du réseau de transport. Cet affichage permet une lecture aisée des résultats. Cet affichage peut prendre la forme d'une note ou d'un code couleur ou d'une épaisseur de représentation de chaque brin sur la carte. Cet affichage peut être réalisé à bord du véhicule : sur le tableau de bord, sur un dispositif portatif autonome, tel qu'un appareil de géolocalisation (de type GPS), un téléphone portable (de type téléphone intelligent) ou un ordinateur. Il est également possible d'afficher le nombre d'utilisations (ou du débit, ou du taux ou de la fréquence d'utilisations ou des utilisateurs) de chaque mode de transport passant par l'au moins un brin du réseau de transport sur un site internet. De plus, le nombre d'utilisations (ou du débit, ou du taux ou de la fréquence d'utilisations ou des utilisateurs) de chaque mode de transport passant par l'au moins un brin du réseau de transport peut être partagé avec les pouvoirs publics (par exemple gestionnaire de la voirie) et les entreprises de travaux publics. Ainsi, les pouvoirs publics et les entreprises de travaux publics peuvent déterminer les routes ayant un débit de d'utilisation élevé et le mode de transport associé, et les aménagements à apporter au réseau de transport pour limiter la congestion ou limiter les émissions polluantes émises (par exemple création de nouvelles voies, modification de la signalisation, etc.).

L'invention concerne un procédé de détermination d'émissions polluantes sur au moins un brin de réseau de transport au sein d'un espace prédéterminé. Pour ce procédé, on met en œuvre le procédé de détermination du nombre d'utilisations (ou du taux ou du débit ou de la fréquence d'utilisations ou d'utilisateurs) de différents modes de transport sur au moins un brin d'un réseau de transport au sein d'un espace prédéterminé tel que décrit précédemment et on détermine, pour l'au moins un brin du réseau de transport, les émissions polluantes dues à chaque mode de transport de chaque trajectoire d'apprentissage et/ou de la matrice de données passant par le brin concerné. Ce procédé peut notamment être utilisé pour modifier des infrastructures du réseau de transport (ajout de voies, construction de voies spécifiques pour des modes de transport particulier, vélo ou trottinette par exemple), pour modifier les limitations de vitesse de certains (au moins un) brins du réseau de transport et/ou d'interdire la circulation de certains véhicules sur certains (au moins un) brins du réseau de transport, en évaluant l'impact de ces modifications sur la quantité d'émissions polluantes émises sur les brins du réseau de transport et par voie de conséquence sur la qualité de l'air.

Avantageusement, on peut déterminer les émissions polluantes de chaque mode de transport par la multiplication d'une valeur d'émissions polluantes de chaque mode de transport sur le brin concerné du réseau de transport et du nombre d'utilisations de chaque mode de transport associé sur ledit brin concerné du réseau de transport. Ainsi, on peut établir rapidement une évaluation des émissions polluantes en fonction des différents modes de transports du brin concerné.

Alternativement ou additionnellement, lorsque les modes de transport sont liés à des véhicules, on peut déterminer la quantité d'émissions polluantes émise par chaque véhicule de chaque mode de transport sur un brin par la méthode décrite dans la demande de brevet FR3122011 A1.

Alternativement ou additionnellement, on peut appliquer la méthode suivante :

En outre, l'invention concerne un procédé de détermination d'une quantité de polluants émis par une pluralité de trajets. Pour ce procédé, on met en œuvre les étapes suivantes :

- on applique un modèle d'émissions polluantes, qui relie la vitesse et la trajectoire à une quantité d'au moins un polluant émis, ainsi on obtient une quantité d'émissions polluantes par trajectoire ; et
- On détermine la quantité d'au moins un polluant émis par ladite pluralité de trajectoires.

Le modèle des émissions de polluantes peut notamment s'écrire sous la forme :

$Q_{pol,gro} = f(v_{gro}, traj_{gro})$ avec $Q_{pol,gro}$ une quantité des émissions de de la trajectoire considérée, $v_{gro}$ une vitesse des véhicules pour la trajectoire considérée, $traj_{gro}$ la trajectoire considérée, f une fonction correspondant au modèle.

La fonction f peut être obtenue à partir d'un modèle dynamique de véhicule, ou par apprentissage automatique, ou par tout moyen analogue.

Ensuite, on peut déterminer une quantité de polluants par l'ensemble de trajectoires au moyen d'une formule du type :

$$Q_{pol,tot} = \sum_{l=0}^{N_{clust,agg}} \omega_l Q_{pol,gro\ l}$$

Avec $Q_{pol,tot}$ la quantité totale de polluants émis, $N_{clust,agg}$ le nombre de regroupements (si des regroupements sont utilisés) ou des trajectoires, $\omega_l$ la pondération du groupement ou de la trajectoire I, $Q_{pol,gro\ l}$ la quantité de polluants émis pour une trajectoire ou pour le groupement I.

La pondération du groupement $\omega_l$ est avantageusement proportionnelle au nombre de trajectoires au sein du groupement.

Selon une mise en œuvre avantageuse du procédé de l'invention, on peut appliquer un parc de véhicules pour déterminer les émissions polluantes, ledit parc de véhicules identifiant une répartition de différents types de véhicules et une valeur d'émissions polluantes en fonction des différents types de véhicules. Le parc de véhicules peut être le parc actuel de véhicules traversant le réseau de transport considéré. Il peut aussi être défini en fonction des historiques d'enregistrement et/ou de la connaissance préalable du parc de véhicules de la zone considérée (c'est-à-dire le réseau de transport). Ainsi, le parc prédéfini est une répartition en nombre ou en pourcentage de véhicules, de chaque véhicule prédéterminé, circulant sur la portion de réseau de transport. Au sein du parc de véhicules, les différents véhicules sont catégorisés, la catégorie du véhicule peut inclure notamment une norme européenne d'émissions polluantes, une cylindrée, un type de motorisation (essence, diesel, électrique, etc.), et une technologie de post-traitement. Cette décomposition du parc de véhicules peut être effectuée pour les véhicules particuliers, les poids lourds, les véhicules utilitaires légers, les deux-roues, etc. Grâce à la prise en compte du parc de véhicules, la détermination des émissions polluantes est plus représentative des conditions réelles ou des conditions futures. En effet, le parc de véhicules peut être une projection dans l'avenir de la répartition des différentes catégories de véhicules, cela dans le but de tester différentes configurations pour limiter la pollution (les émissions polluantes) dans certaines zones.

Ainsi, l'application d'un modèle des émissions polluantes peut prendre en compte le parc de véhicules utilisé pour le réseau de transport considéré.

De préférence, on peut afficher les émissions polluantes déterminées sur une carte représentative du réseau de transport. Cet affichage permet une lecture aisée des résultats. Cet affichage peut prendre la forme d'une note ou d'un code couleur ou d'une épaisseur de représentation de chaque brin sur la carte. Cet affichage peut être réalisé à bord du véhicule : sur le tableau de bord, sur un dispositif portatif autonome, tel qu'un appareil de géolocalisation (de type GPS), un téléphone portable (de type téléphone intelligent) ou un ordinateur. Il est également possible d'afficher le nombre d'utilisations (ou du débit, ou du taux ou de la fréquence d'utilisations ou des utilisateurs) de chaque mode de transport passant par l'au moins un brin du réseau de transport sur un site internet. De plus, les émissions polluantes l'au moins un brin du réseau de transport peut être partagé avec les pouvoirs publics (par exemple gestionnaire de la voirie) et les entreprises de travaux publics. Ainsi, les pouvoirs publics et les entreprises de travaux publics peuvent déterminer les brins du réseau de transport ayant un taux d'émissions polluantes élevé, et les aménagements à apporter au réseau de transport pour limiter les émissions polluantes émises (par exemple création de nouvelles voies, modification de la signalisation, etc.).

En outre, l'invention concerne un procédé de gestion d'infrastructures d'un réseau de transport au sein d'un espace prédéterminé. Pour ce procédé, on peut mettre en œuvre les étapes suivantes :

a) On détermine le nombre d'utilisations et/ou les émissions polluantes de chaque mode de transport pour au moins un brin du réseau de transport au moyen du procédé de détermination du nombre d'utilisations de chaque mode de transport sur au moins un brin de réseau de transport au sein de l'espace prédéterminé ou du procédé de détermination des émissions polluantes selon l'une quelconque des variantes ou des combinaisons de variantes décrites ci-dessus ; et

b) On modifie au moins une infrastructure du réseau de transport en fonction du nombre d'utilisations de chaque mode de transport ou des émissions polluantes, par exemple une infrastructure pour laquelle le nombre d'utilisations est supérieur à un seuil prédéterminé.

Ainsi, on peut gérer un réseau de transport pour limiter voire éviter les pics de pollution, les embouteillages, les risques d'accident.

Selon un mode de réalisation, la modification de l'infrastructure peut être choisie notamment parmi l'ajout d'une signalisation (limitation de vitesse, feu, céder le passage, stop, etc.), la construction d'une nouvelle voie, passage d'un brin à sens unique, construction d'une nouvelle route, etc.

**Exemples**

La méthode selon l'invention a été testée par l'exemple suivant.

Des données CDR ont été utilisées comme données spatiales et temporelles d'apprentissage et comme deuxièmes données spatiales et temporelles, à l'échelle d'une grande métropole.

Ces données ont été utilisées à deux périodes distinctes :

- une première période dite « normale », comprise entre le 22 février 2020, et le 1$^{er}$ mars 2020 et ;
- une deuxième période dite « covid », comprise entre le 1$^{er}$ et le 7 avril 2020.

Ces deux périodes ont été délibérément choisies pour avoir une période de circulation normale avant le confinement dû à la pandémie de Covid19 et une autre période avec une circulation très différente à cause du confinement de la population pendant la pandémie de Covid19.

Sur la période normale, 326 208 648 enregistrements de téléphones ont été acquis ; sur la période covid, 128 406 026 enregistrements ont été acquis.

Les enregistrements correspondent chacun à des données spatiales et temporelles de type CDR.

A partir de ces données, des trajectoires ont pu être déterminées entre des zones d'origine et des zones de destination.

La période normale sert pour la détermination de trajectoires d'apprentissage et du modèle d'apprentissage et la période covid pour la détermination des deuxièmes trajectoires. Compte tenu du nombre élevé de données, les données spatiales et temporelles d'apprentissage (période normale) ainsi que les deuxièmes données spatiales et temporelles (période covid) ont été regroupées en cluster pour limiter les ressources informatiques et le temps de calcul.

Les émissions polluantes ont été déterminées pour un parc de véhicules comprenant 18% de véhicules utilitaires lourds, 6% de poids lourds, 1% de deux roues et 75% de véhicules particuliers. Les proportions de motorisation des différents véhicules par norme sont précisées dans les tables ci-dessous.

| Répartition motorisations véhicules particuliers | |
|---|---|
| Norme | Part (%) |
| Euro1 Diesel | 0,6 |
| Euro1 Essence | 0,3 |
| Euro2 Diesel | 1,3 |
| Euro2 Essence | 0,8 |
| Euro3 Diesel | 5,1 |
| Euro3 Essence | 2 |
| Euro4 Diesel | 21,5 |
| Euro4 Essence | 6,5 |
| Euro5 Diesel | 22 |
| Euro5 Essence | 9,2 |
| Euro6 Diesel | 13,6 |
| Euro6 Essence | 16,1 |

| Répartition motorisations véhicules utilitaires légers | |
|---|---|
| Norme | Part (%) |
| Euro3 P | 1,7 |
| Euro4 P | 2,8 |
| Euro5 P | 4,2 |
| Euro3 M | 10,1 |
| Euro4 M | 17,2 |
| Euro5 M | 25,6 |
| Euro6 M | 37,8 |

| Répartition motorisations véhicules poids lourds | |
|---|---|
| Norme | Part (%) |
| PL 1 | 5,3 |
| PL 2 | 1 |
| PL 3 | 10 |
| PL 4 | 1,3 |
| PL 5 | 12,6 |
| PL 6 | 6,6 |
| PL 7 | 28,7 |
| PL 8 | 34,5 |

La figure 7 illustre la comparaison des émissions polluantes émises sur chaque brin du réseau de transport dans la métropole concernée pour la période normale à droite et pour la période covid à gauche.

Sur la carte représentative du réseau de transport de cette métropole (qui définit ainsi l'espace prédéterminé), les niveaux de gris représentent les variations d'émissions polluantes sur chaque brin : plus le niveau de gris est foncé, plus les émissions polluantes sont élevées (la qualité de l'air est mauvaise). A l'inverse, plus le niveau de gris est clair et moins les émissions polluantes sont élevées (meilleure est la qualité de l'air).

On peut observer, grâce au procédé de l'invention, une différence très significative des émissions polluantes émises sur chaque brin du réseau de transport, les émissions polluantes étant bien moins nombreuses sur la période covid à gauche que sur la période normale à droite. De plus, grâce au modèle, il n'a pas été nécessaire de reproduire les étapes b) à d) qui nécessitent beaucoup de mémoire et processeurs informatiques. Les résultats de la période covid ont été obtenus à partir d'une matrice de données et du modèle obtenu à partir des trajectoires d'apprentissage, de manière très rapide.

**Revendications**

1. Procédé de détermination du nombre d'utilisations de différents modes de transport sur au moins un brin d'un réseau de transport au sein d'un espace prédéterminé, au moyen de téléphones (Tel) et d'un réseau (Res) de téléphonie mobile auxquelles lesdits téléphones (Tel) peuvent se connecter, et au moyen d'au moins un réseau de transport (RT) comprenant des brins, **caractérisé en ce qu'**on réalise au moins les étapes suivantes par des moyens informatiques, tels qu'un ordinateur :

   a) on acquiert (Acq) des données spatiales et temporelles d'apprentissage (DSP) de connexion de téléphones (Tel) audit réseau (Res) de téléphonie mobile, les données spatiales et temporelles (DSP) d'apprentissage comprenant les positions des antennes du réseau (Res) de téléphonie mobile auxquelles chaque téléphone (Tel) s'est connecté et les instants auxquels ont eu lieu ces connexions de chaque téléphone (Tel) aux antennes, de préférence les données spatiales et temporelles d'apprentissage (DSP) étant des données CDR ou NSD
   b) on discrétise l'espace prédéterminé en zones ;
   c) pour chaque trajet défini par une zone d'origine (ZD) et une zone de destination (ZA), chaque zone d'origine (ZD) et chaque zone de destination étant parmi lesdites zones de l'espace prédéterminé discrétisé,

      c1) on détermine (For) des trajectoires d'apprentissage (Traj) dudit trajet, à partir des données spatiales et temporelles d'apprentissage (DSP) acquises, chaque trajectoire d'apprentissage (Traj) correspondant à la succession de positions des antennes auxquelles un desdits téléphones (Tel) s'est connecté et les instants de ces connexions;
      c2) on détermine (MDT), pour chaque trajectoire d'apprentissage (Traj) déterminée, le chemin parcouru sur le réseau de transport et le mode de transport associé, le chemin parcouru étant une succession de brins du réseau de transport (RT) à des instants de passage;

   d) à partir des chemins et des modes de transports déterminés à l'étape c2), on réalise (Real) un modèle (Mod) du nombre d'utilisations de chaque mode de transport sur ledit au moins un brin du réseau de transport reliant les trajectoires à un nombre d'utilisations (Nb_mdt) de chaque mode de transport sur ledit au moins un brin du réseau de transport (RT) ;
   e) on acquiert une matrice de données (Mat) et on applique ladite matrice de données (Mat) audit modèle (Mod) du nombre d'utilisations pour chaque mode de transport sur ledit au moins un brin du réseau de transport pour déterminer le nombre d'utilisations (Nb_mdt) de chaque mode de transport sur ledit au moins un brin du réseau de transport (RT) à partir de ladite matrice de données (Mat).

2. Procédé selon la revendication 1, dans lequel à l'étape d), pour réaliser (Real) le modèle (mod) du nombre d'utilisations (Nb_mdt) de chaque mode de transport sur ledit au moins un brin du réseau de transport, on réalise les sous-étapes suivantes :

   d1) pour chaque trajet, on identifie (IN1) un premier nombre (N1) de trajectoires d'apprentissage liées à chaque mode de transport ;
   d2) pour chaque trajet, on identifie (IN2) un deuxième nombre (N2) de trajectoires d'apprentissage liées à chaque mode de transport et passant par ledit au moins un brin u réseau de transport (RT) ;
   d3) puis pour chaque trajet, on détermine (I_ratio) la proportion (ratio) de trajectoires d'apprentissage (Traj) liées à chaque mode de transport et passant par ledit au moins un brin du réseau de transport (RT), cette proportion (ratio) étant, pour chaque mode de transport, le rapport entre le deuxième nombre (N2) et le premier nombre (N1) ;
   d4) on réalise (Eq) le modèle (Mod) du nombre d'utilisations de chaque mode de transport sur ledit au moins un brin du réseau de transport à partir de l'équation suivante :

$$\hat{f}_{M,b_l} = \sum_{A \in \Gamma} \sum_{B \neq A \in \Gamma} q_{A,B,M,b_l} \tilde{f}_{A,B,M}$$

avec $\hat{f}_{M,b_l}$ le nombre d'utilisations du mode de transport prédéterminé M passant par ledit au moins un brin $b_l$ du réseau de transport

$q_{A,B,M,b_l}$ la proportion calculée à l'étape d3) pour chaque trajet partant de la zone d'origine A vers la zone de destination B du mode de transport prédéterminé M passant par ledit au moins un brin $b_l$ du réseau de transport

$\tilde{f}_{A,B,M}$ le nombre de trajectoires du trajet partant de la zone d'origine A vers la zone de destination B pour le mode de transport prédéterminé

$\Gamma$ étant l'espace du réseau de transport (RT) considéré.

3. Procédé selon l'une des revendications précédentes, dans lequel on réalise un pré-traitement (Pre) et/ou un filtrage (Fil) des données spatiales et temporelles d'apprentissage (DSP).

4. Procédé selon l'une des revendications précédentes, dans lequel on affecte un premier coefficient de redressement auxdites trajectoires d'apprentissage (Traj) en fonction des utilisateurs des téléphones (Tel) pour lesquels les données spatiales et temporelles d'apprentissage (DSP) ont été acquises à l'étape a).

5. Procédé selon l'une des revendications précédentes, dans lequel on acquiert (Acq2) des deuxièmes données spatiales et temporelles (DSP2) de connexion de téléphones (Tel) audit réseau (Res) de téléphonie mobile, les deuxièmes données spatiales et temporelles (DSP) comprenant les positions des antennes du réseau (Res) de téléphonie mobile auxquelles chaque téléphone (Tel) s'est connecté et les instants auxquels ont eu lieu ces connexions de chaque téléphone (Tel) aux antennes, et on détermine (Det1) des deuxièmes trajectoires (Traj2) de manière à former (For2) ladite matrice de données (Mat) acquise à partir des deuxièmes données spatiales et temporelles (DSP2) et de préférence on affecte un deuxième coefficient de redressement auxdites deuxièmes trajectoires (Traj2) en fonction des utilisateurs des téléphones pour lesquels les deuxièmes données spatiales et temporelles (DSP2) ont été acquises.

6. Procédé selon la revendication 5, dans lequel on regroupe (reg2) les deuxièmes trajectoires en cluster de deuxièmes trajectoires (Traj2), de préférence au moyen d'une méthode de regroupement agglomératif basé sur une distance spatio-temporelle, ladite distance spatio-temporelle étant une somme pondérée d'une distance spatiale entre deux deuxièmes trajectoires et une distance temporelle fonction de la différence de durée entre les deux deuxièmes trajectoires, ladite distance spatiale et la distance temporelle étant déterminées à partir des deuxièmes données spatiales et temporelles (DSP2), les groupements différenciant les vitesses et les trajectoires.

7. Procédé selon l'une des revendications précédentes, dans lequel à l'étape c1), on regroupe (reg1) différentes trajectoires d'apprentissage (Traj_int) déterminées en clusters de trajectoires d'apprentissage (Traj).

8. Procédé selon la revendication 7, dans lequel on regroupe les trajectoires d'apprentissage (Traj_int) au moyen d'une méthode de regroupement agglomératif basé sur une distance spatio-temporelle, ladite distance spatio-temporelle étant une somme pondérée d'une distance spatiale entre deux trajectoires d'apprentissage (Traj_int) et une distance temporelle fonction de la différence de durée entre les deux trajectoires d'apprentissage (Traj_int), ladite distance spatiale et la distance temporelle étant déterminées à partir des données spatiales et temporelles d'apprentissage (DSP), les groupements différenciant les vitesses et les trajectoires.

9. Procédé selon l'une des revendications précédentes, dans lequel, aux étapes c1) et c2), on réalise au moins les sous-étapes suivantes :

- on construit des graphes de transport (G_MDP) pour chaque mode de transport, chaque graphe de transport (G_MDP) comprenant des nœuds, des portions de route reliant les différents nœuds et les vitesses moyennes de déplacement sur chaque portion de route, chaque portion de route du graphe de transport (G_MDP) représentant les routes possibles par le mode de transport associé, la superposition des graphes de transport (G_MDP) formant le réseau de transport (RT), chaque brin du réseau de transport (RT) correspondant à une desdites portions de route d'au moins un desdits graphes de transport (G_MDP), dans lequel on met en œuvre au moins les étapes suivantes :

i) à partir des données spatiales et temporelles d'apprentissage (DSP) acquises, on détermine une succession de couples emplacements-instants définis par des emplacements correspondant à desdites positions des antennes issues des données spatiales et temporelles d'apprentissage (DSP) acquises et par les instants correspondant à ces emplacements et on forme au moins une sous-route reliant deux couples emplacements-instants successifs, une succession des sous-routes déterminant une trajectoire (Traj) d'apprentissage ;

ii) Pour chaque graphe de transport (G_MDP), on détermine (Det) les positions successives du téléphone sur des nœuds identifiés successifs (NIS) du graphe de transport (G_MDP) à partir des couples emplacements-instants, les nœuds identifiés successifs (NIS) étant positionnés le plus près possible de chaque emplacement ;

iii) Puis pour chaque graphe de transport (G_MDP) et pour chaque sous-route, on détermine (Opt), par des optimisations de plus court chemin, un nombre prédéterminé de chemins possibles (CP) permettant de relier les différents nœuds identifiés successifs (NIS) par des portions de route, chaque chemin possible (CP) comprenant les nœuds de passage reliant toutes les portions de route du chemin possible (CP), et on calcule l'instant de passage de chaque nœud de passage à partir des vitesses moyennes associées à chaque portion de route, chaque chemin possible (CP) étant déterminé par la liste de tous les couples nœuds de passage - instants de passages dudit chemin possible (CP) ;

iv) on détermine (Corr) un indice de corrélation (Ind) entre chacun des chemins possibles (CP) déterminés et la trajectoire d'apprentissage, l'indice de corrélation (Ind) étant représentatif de la proximité spatiale et/ou de la proximité temporelle de chaque nœud identifié successif (NIS) avec les emplacements de la trajectoire d'apprentissage (Traj) ; et

v) on détermine (Det_MDP) le mode de transport (MDP) de chaque trajectoire d'apprentissage, par détermination du mode de transport qui optimise l'indice de corrélation (Ind) de la trajectoire d'apprentissage, et le chemin parcouru correspondant au chemin possible optimisant l'indice de corrélation.

10. Procédé selon la revendication 9, dans lequel on extrait un sous-graphe de chaque graphe de transport, le sous-graphe étant une partie du graphe de transport (G_MDP) limité à une largeur prédéterminée autour de chaque sous-route déterminée à l'étape i) et on utilise le sous-graphe au lieu du graphe de transport (G_MDP) pour chacune des étapes ii) à v).

11. Procédé selon l'une des revendications précédentes, pour lequel on affiche le nombre d'utilisations (Nb_mdt) de chaque mode de transport passant par l'au moins un brin du réseau de transport (RT), de préférence par au moins un groupe de brins du réseau de transport (RT) et de manière encore préférée par tous les brins du réseau de transport (RT), sur une carte représentative du réseau de transport (RT).

12. Procédé de détermination d'émissions polluantes (Pol) sur au moins un brin de réseau de transport (RT) au sein d'un espace prédéterminé, **caractérisé en ce qu'**on met en œuvre le procédé selon l'une des revendications précédentes et **en ce qu'**on détermine (Calc), pour l'au moins un brin du réseau de transport (RT), les émissions polluantes (Pol) dues à chaque mode de transport de chaque trajectoire d'apprentissage (Traj) et/ou de la matrice de données (Mat) passant par ledit brin.

13. Procédé selon la revendication 12, dans lequel on détermine (Calc) les émissions polluantes (Pol) de chaque mode de transport par la multiplication d'une valeur d'émissions polluantes de chaque mode de transport sur ledit au moins un brin du réseau de transport (RT) et du nombre d'utilisations (Nb_mdt) de chaque mode de transport associé sur ledit au moins un brin du réseau de transport (RT).

14. Procédé selon l'une des revendications 12 ou 13, dans lequel on affiche les émissions polluantes (Pol) déterminées sur une carte représentative du réseau de transport (RT).

15. Procédé selon l'une des revendications 12 à 14, dans lequel on applique un parc de véhicules pour déterminer (Calc) les émissions polluantes (Pol), ledit parc de véhicules identifiant une répartition de différents types de véhicules et une valeur d'émissions polluantes en fonction des différents types de véhicules.

16. Procédé de gestion d'infrastructure d'un réseau de transport au sein d'un espace prédétermine, dans lequel on met en œuvre au moins les étapes suivantes :

1) On détermine le nombre d'utilisations et/ou les émissions polluantes de chaque mode de transport pour au moins un brin du réseau de transport au moyen du procédé de détermination du nombre d'utilisations de chaque mode de transport sur au moins un brin de réseau de transport au sein de l'espace prédéterminé selon l'une des revendications 1 à 11 ou du procédé de détermination des émissions polluantes selon l'une des revendications 12 à 15 ; et

2) On modifie au moins une infrastructure du réseau de transport en fonction du nombre d'utilisations de chaque mode de transport ou des émissions polluantes, de préférence une infrastructure pour laquelle le nombre d'utilisations est supérieur à un seuil prédéterminé.

[Fig 1]

[Fig 2]

[Fig 3]

[Fig 4]

[Fig 5]

[Fig 6]

[Fig 7]

Europäisches
Patentamt

European
Patent Office

Office européen
des brevets

# RAPPORT DE RECHERCHE EUROPEENNE

**Numéro de la demande**

EP 24 21 6279

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 195 709 A1 (IFP ENERGIES NOW [FR]) 14 juin 2023 (2023-06-14) | 1-5,9-16 | INV. H04L41/142 |
| Y | * le document en entier * | 6-8 | H04L41/14 H04L41/16 |
| | ----- | | |
| Y | FR 3 132 570 A1 (IFP ENERGIES NOW [FR]) 11 août 2023 (2023-08-11) | 6-8 | H04L43/065 H04L43/0876 |
| A | * le document en entier * | 1-5,9-16 | H04W4/029 H04W16/18 |
| | ----- | | H04W16/22 |
| A | FR 3 134 472 A1 (IFP ENERGIES NOW [FR]) 13 octobre 2023 (2023-10-13) * le document en entier * | 1-16 | H04W64/00 |
| | ----- | | |

**DOMAINES TECHNIQUES RECHERCHES (IPC)**

H04L
H04W

Le présent rapport a été établi pour toutes les revendications

| Lieu de la recherche | Date d'achèvement de la recherche | Examinateur |
|---|---|---|
| Munich | 5 mars 2025 | García Bolós, Ruth |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 4 572 281 A1**

## ANNEXE AU RAPPORT DE RECHERCHE EUROPEENNE
## RELATIF A LA DEMANDE DE BREVET EUROPEEN NO.

EP 24 21 6279

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-03-2025

| Document brevet cité au rapport de recherche | Date de publication | Membre(s) de la famille de brevet(s) | Date de publication |
|---|---|---|---|
| EP 4195709 A1 | 14-06-2023 | EP 4195709 A1 <br> FR 3130488 A1 | 14-06-2023 <br> 16-06-2023 |
| FR 3132570 A1 | 11-08-2023 | EP 4239289 A1 <br> FR 3132570 A1 | 06-09-2023 <br> 11-08-2023 |
| FR 3134472 A1 | 13-10-2023 | EP 4261802 A1 <br> FR 3134472 A1 | 18-10-2023 <br> 13-10-2023 |

EPO FORM P0460

Pour tout renseignement concernant cette annexe : voir Journal Officiel de l'Office européen des brevets, No.12/82

**EP 4 572 281 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 105426636
- CN 112767686
- CN 108682156
- FR 2307300
- FR 3130488 A1
- FR 3122011 A1

**Littérature non-brevet citée dans la description**

- **LOÏC BONNETAIN** ; **ANGELO FURNO** ; **NOUR-EDDIN EL FAOUZI** ; **MARCO FIORE** ; **RAZVAN STANICA** ; **ZBIGNIEW SMOREDA** ; **CEZARY ZIEMLICKI**. TRANSIT: Fine-grained human mobility trajectory inference at scale with mobile network signaling data. *Transportation Research Part C: Emerging Technologies*, 2021

- **MANON SEPPECHER**. Exploration de données de téléphonie mobile pour la reconstruction de patterns globaux de mobilité urbaine pour le calcul d'émission à large échelle. *Manuscrit de thèse*, 2022